# EUROPÄISCHE PATENTSCHRIFT

(11) **EP 4 592 945 B1**
(45) Veröffentlichungstag und Bekanntmachung des Hinweises auf die Patenterteilung: **07.10.2026**
(21) Anmeldenummer: 24154448.5
(22) Anmeldetag: 29.01.2024
(51) Int. Cl.: G06T 7/00, G06T 7/586

(54) **VERFAHREN ZUR ERMITTLUNG EINES ZUSTANDES EINES WERKZEUGS**
METHOD FOR DETERMINING A STATE OF A TOOL
PROCÉDÉ DE DÉTERMINATION D'UN ÉTAT D'UN OUTIL

(43) Veröffentlichungstag der Anmeldung: 30.07.2025
(73) Patentinhaber: Fraisa SA, 4512 Bellach (CH)
(72) Erfinder: EDELMANN, Max, 79650 Schopfheim (DE); BRUNO, Antonio Mariano, 4600 Olten (CH); NÄGELIN, Thomas, 4512 Bellach (CH)
(74) Vertreter: Keller Schneider Patent- und Markenanwälte AG

(56) Entgegenhaltungen:
- EP-A1- 3 881 968
- SUN KWON KIM ET AL: "Photometric stereo-based single time-of-flight camera", OPTICS LETTERS, vol. 39, no. 1, 24 December 2013 (2013-12-24), pages 166, XP055107917, ISSN: 0146-9592, DOI: 10.1364/OL.39.000166
- KIM B ET AL: "Depth and shape from shading using the photometric stereo method", CVGIP IMAGE UNDERSTANDING, ACADEMIC PRESS, DULUTH, MA, US, vol. 54, no. 3, 1 November 1991 (1991-11-01), pages 416 - 427, XP024888778, ISSN: 1049-9660, [retrieved on 19911101], DOI: 10.1016/1049-9660(91)90040-V

## Beschreibung

### Technisches Gebiet

Die Erfindung betrifft ein Verfahren zur Ermittlung eines Zustandes eines Werkzeugs. Sie betrifft weiter eine Vorrichtung zur Ermittlung des Zustandes eines Werkzeugs und eine Anlage mit einer solchen Vorrichtung.

### Stand der Technik

Viele Werkzeuge, z. B. solche zur zerspanenden Materialbearbeitung wie Fräser, Bohrer usw., unterliegen aufgrund ihrer Wechselwirkung mit den Werkstücken einem Verschleiss. Dieser führt bei einem gewissen Ausmass zu einem verschlechterten Bearbeitungsergebnis, zu höheren Bearbeitungszeiten und/oder zu einer irreparablen Beschädigung des Werkzeugs (oder sogar des Werkstücks). Besonders bei Werkzeugen, die in automatisch betriebenen Maschinen eingesetzt werden, werden die Werkzeuge deshalb rechtzeitig bevor vorerwähnte Effekte auftreten aus der Maschine entnommen. Wenn möglich werden die Werkzeuge dann für einen weiteren Einsatz aufbereitet, z. B. indem Bearbeitungselemente derselben ersetzt oder aufbereitet (z. B. nachgeschliffen) werden. Wenn eine Aufbereitung generell oder aufgrund des Verschleisszustandes nicht (mehr) möglich ist, werden die Werkzeuge dem Recycling zugeführt oder entsorgt.

Das Entnehmen und Austauschen der Werkzeuge kann jeweils nach einer vorgegebenen Zeitdauer oder einer vorgegebenen Anzahl von Bearbeitungszyklen erfolgen, wobei die Dauer bzw. die Anzahl so gewählt ist, dass beim entsprechenden Werkzeugtyp bis dahin auch in einem "worst case"-Szenario keine negativen Effekte zu erwarten sind. Die Werkzeuge werden somit generell eher zu früh entnommen und ausgetauscht sowie aufbereitet. Entsprechend verkürzt sich die effektive Nutzdauer der Werkzeuge, die Anzahl der Werkzeugwechsel und der Werkzeugaufbereitungen ist höher als eigentlich notwendig.

Alternativ werden die Werkzeuge und/oder das Bearbeitungsergebnis am Werkstück vom Bedienpersonal begutachtet, je nach Werkzeug von blossem Auge oder mit Hilfe von Hilfsmitteln, z. B. Vergrösserungsgläsern, Mikroskopen oder Messgeräten. Das Bedienpersonal entscheidet dann, ob ein weiterer Einsatz möglich ist.

Die Begutachtung ist arbeitsintensiv, erfordert in der Regel einen Stopp der entsprechenden Maschine und oft auch eine Entnahme des Werkzeugs aus derselben. Insbesondere wenn die Begutachtung durch unterschiedliche Personen erfolgt, ergeben sich auch Inkonsistenzen bei der Beurteilung.

Es wurden bereits Systeme zur automatischen Verschleisserkennung vorgeschlagen. So betrifft die CN 108107838 A (Shandong University) die Verschleisserkennung an Schneidwerkzeugen. Dazu wird eine cloudbasierte Wissensdatenbank mit Abnutzungsdaten aufgebaut und ein Detektionsmodell auf Basis einer Support Vector Machine (SVM) trainiert. Die Daten werden laufend aktualisiert, so dass die Erkennung verbessert wird.

Die US 7,479,056 B2 (I<ycera Tycom) beschreibt ein vollautomatisches System zur Überprüfung der Identität und Geometrie eines Bohrwerkzeugs, zum Aufbereiten des Werkzeugs, zur Überprüfung anhand von vorgegebenen Toleranzen, zur Einstellung eines Positionierungsrings am Werkzeugschaft sowie zum Reinigen und Einpacken des aufbereiteten Werkzeugs. Die Überprüfung der Geometrie erfolgt mit optischen Einheiten. Diese umfassen jeweils kopf- und frontseitige Kameras zum Abbilden der Stirn- und Mantelfläche des Werkzeugs. Anlässlich der Werkzeugprüfung erzeugte Daten können in der Steuerung gespeichert werden. Anhand der aufgenommenen Bilder werden vorgegebene Referenzpunkte identifiziert und Distanzen zwischen diesen ausgemessen. Ferner wird eine Ersteinschätzung des Schneidkantenzustands vorgenommen.

Die US 7,479,056 B2 offenbart nichts Näheres zur Auswertung der Bilddaten. Die Ersteinschätzung erfolgt anhand der Aussengeometrie des Werkzeugs und des Zustands der Schneidkanten, wobei nicht klar ist, wie dieser bestimmt oder klassiert werden kann.

Die EP 3 881 968 A1 (Fraisa SA, GF Machining Solutions AG) offenbart ein Verfahren zur Ermittlung des Verschleisszustandes eines Werkzeugs, bei dem Bilddaten mindestens eines optischen Bildes zur Erkennung einer Verschleisszone verarbeitet werden. Dabei wird eine flächige und/oder räumliche Ausdehnung der Verschleisszone bestimmt und der Verschleisszustand des Werkzeugs gestützt auf die bestimmte Ausdehnung klassiert.

Dieses Verfahren ermöglicht eine automatische Klassierung. Es hat sich aber insbesondere bei Vollmaterial-Schaftwerkzeugen gezeigt, dass mit diesem Verfahren nicht in jedem Fall eine zuverlässige Klassierung erreicht wird.

### Darstellung der Erfindung

Aufgabe der Erfindung ist es, ein dem eingangs genannten technischen Gebiet zugehörendes Verfahren zu schaffen, welches automatisch und zuverlässig den Zustand eines Werkzeugs erkennen kann.

Die Lösung der Aufgabe ist durch die Merkmale des Anspruchs 1 definiert. Gemäss der Erfindung umfasst das Verfahren zur Ermittlung eines Zustandes eines Werkzeugs folgende Schritte:
a) Aufnahme mehrerer optischer Bilder einer Oberfläche des Werkzeugs bei unterschiedlichen Beleuchtungszuständen;
   gekennzeichnet durch
b) Verarbeiten von Bilddaten der mehreren optischen Bilder mittels photometrischer Stereoanalyse zur Erzeugung eines Bildes mit Oberflächenstrukturinformationen, wobei es sich beim Bild mit Oberflächenstrukturinformationen um ein Höhenbild und/oder um ein Krümmungsbild handelt;
c) Vorverarbeiten des Bildes mit Oberflächenstrukturinformationen zur Erzeugung eines oder mehrerer vorverarbeiteter Bilder;
d) Klassierung des Zustandes des Werkzeugs in eine von mindestens zwei Klassen anhand des einen oder der mehreren vorverarbeiteten Bilder mittels eines Machine-Learning-Verfahrens.

Das Verarbeiten der Bilddaten, das Vorverarbeiten des Bildes mit Oberflächenstrukturinformationen und die Klassierung des Zustandes erfolgen computergestützt.

Die unterschiedlichen Beleuchtungszustände zeichnen sich insbesondere durch unterschiedliche Beleuchtungsrichtungen aus.

Bei den optischen Bildern handelt es sich um Aufnahmen im sichtbaren Bereich des Spektrums oder in benachbarten Wellenlängenbereichen (IR und UV). Generell wird das Werkzeug bzw. dessen interessierender Bereich beleuchtet und an der Oberfläche reflektiertes Licht wird mit einer geeigneten Einrichtung (Kamera; Abbildungsoptik mit Bildsensor) erfasst. Das Licht zur Beleuchtung kann ein kontinuierliches Spektrum oder ein aus mehreren Wellenlinien oder Frequenzbändern zusammengesetztes Spektrum aufweisen oder monochromatisch sein. Auch die Kamera kann ein breites Frequenzband, eines oder mehrere schmale Bänder oder eine bestimmte Frequenz erfassen; weitergeben kann sie ebenfalls monochromatische oder polychromatische Informationen. Weiter verarbeitet werden dann aber bevorzugt Graustufenbilder.

Bevorzugt umfassen die Bilddaten ein zweidimensionales Abbild der Oberfläche, und zur Erzeugung eines Bildes mit Oberflächenstrukturinformationen werden die dem zweidimensionalen Abbild entsprechenden Bilddaten herangezogen. Effiziente Verfahren zu diesem Zweck sind bekannt.

Die optischen Bilder müssen nicht die gesamte Werkzeugoberfläche abbilden. Im Prinzip genügt es, diejenigen Bereiche der Werkzeugoberfläche abzubilden, bei denen Verschleiss oder Fehler zu erwarten sind, beispielsweise Schneidkanten eines Rotationswerkzeugs. Auch kann beispielsweise der Schaft eines Schaftwerkzeugs oder ein radial innerer Bereich einer Schleif- oder Trennscheibe von der Abbildung ausgeklammert werden. Falls mit einer gleichmässigen Abnutzung gerechnet werden kann, kann es ausreichen, nur repräsentative Bereiche zu erfassen. Ist mit punktuellen Abnutzungen (z. B. Absplitterungen) zu rechnen, ist es in der Regel sinnvoll, alle potenziell betroffenen Bereiche optisch zu erfassen, so dass z. B. bei einer Zusammennahme der mehreren optischen Bilder die mit den Werkstücken zusammenwirkenden Schneidenbereiche vollständig erfasst sind.

Beim Bild mit Oberflächenstrukturinformationen handelt es sich insbesondere um ein zweidimensionales Graustufenbild.

Die Klassierung in eine von mindestens zwei Klassen kann die Zuordnung des Werkzeugs zu einer Verschleissklasse umfassen, z. B. «neu(wertig)», «geringer Verschleiss», «mittlerer Verschleiss» und «hoher Verschleiss». Die Klassierung kann auch auf die zu treffenden Massnahmen gerichtet sein, z. B. «weiter verwenden», «aufbereiten», «entsorgen». Weitere Klassierungen sind möglich, z. B. eine Zuordnung zu einem von mehreren möglichen Aufbereitungsverfahren (Reinigen, Polieren, Schleifen, Neubeschichtung usw.), die Zuweisung eines Zeitpunkts für eine nächste Überprüfung oder eines Anwendungsbereichs, in dem das Werkzeug noch benutzbar ist - z. B. in Verfahren, die einfacher zu bearbeitende Materialien betreffen oder geringere Präzisionsanforderungen stellen.

Die Klassierung kann auch zur Unterscheidung zwischen makellosen Neuwerkzeugen und Neuwerkzeugen mit Produktions- und Fertigungsmängeln wie Beschichtungsfehlern oder Mikroausbrüchen dienen. In diesem Fall kann eine Klassierung in zwei Klassen ausreichend sein. Je nach Ergebnis werden Werkzeuge mit Produktions- oder Fertigungsmängeln direkt aufbereitet oder recycelt bzw. entsorgt. Mithilfe des erfindungsgemässen Verfahrens kann so die Qualitätssicherung systematisiert und automatisiert werden.

Diese Klassierung und diejenige auf Verschleiss können kombiniert werden, so dass der Zustand des Werkzeugs in allen seinen Lebensphasen beurteilt werden kann, beginnend mit den erwähnten Fertigungsmängeln über initiale Gebrauchsspuren durch erstmaligen I<ontakt mit dem Werkstück bis zu manifesten Schäden, die die Bearbeitungsqualität beeinflussen. Diese Schäden sind insbesondere typische Verschleissmarken, wie sie aufgrund Freiflächenverschleiss, I<olkverschleiss, Ausbrüchen und Rissen sowie Adhäsion in Form von Aufbauschneiden bekannt sind.

Die Klassierung kann auch unmittelbar das Generieren von Parametern für eine nachfolgende Werkzeugaufbereitung umfassen, wobei in diesem Fall die resultierende Klassenzahl (Sets mit einer gewissen Parameterkombination) erheblich grösser ist. Alternativ werden aber die Parameter für die Aufbereitung erst nach der Klassierung erzeugt, gestützt auf die ursprünglichen Bilddaten und/oder die vorverarbeiteten Bilder.

Es ist ebenfalls möglich, gesonderte Klassierungen für den Zustand verschiedener Bereiche des Werkzeugs (z. B. Werkzeugstirn und Werkzeugmantel) vorzunehmen, so dass beispielsweise eine Aufbereitung nur in gewissen Bereichen des Werkzeugs notwendig ist.

Je nach Werkzeug und Anwendung kann sich der Verschleiss auf verschiedene Arten manifestieren. Im Vergleich zu einem unbenutzten einsatzfähigen Werkzeug sind beispielsweise gewisse Dimensionen aufgrund eines Materialabtrags am Werkzeug verringert, es treten Deformationen auf, die zu einer veränderten Geometrie führen, oder einzelne Regionen weisen Abnutzungsspuren an der Oberfläche und/oder bis in eine gewisse Tiefe auf.

Das erfindungsgemässe Verfahren lässt sich im Zusammenhang mit einer Vielzahl von Werkzeugen einsetzen, insbesondere mit solchen, die mechanisch auf das Werkstück einwirken oder die aufgrund der Wechselwirkung mit dem Werkstück abgetragen werden. Dazu zählen insbesondere Werkzeuge zur zerspanenden Materialbearbeitung und zwar sowohl rotative Werkzeuge zum Fräsen, Bohren oder Gewindeschneiden als auch stationäre bzw. linear bewegte Werkzeuge wie Drehmeissel, Stanzwerkzeuge oder Sägen.

Die Zustandsbestimmung kann vollautomatisch erfolgen, gegenüber einer manuellen Beurteilung liefert sie zudem ein objektives Bild, da alle Werkzeuge auf dieselbe Weise beurteilt werden. Dank der Automatisierung kann die Zustandsbestimmung in regelmässigen Abständen erfolgen, so dass zum einen Mängel im Bearbeitungsergebnis durch übermässig abgenutzte Werkzeuge verhindert werden können und dass zum anderen Werkzeuge, die eigentlich noch nutzbar sind, nicht vorzeitig aufbereitet, entsorgt oder rezykliert werden. Der Einsatz eines Machine-Learning-Verfahrens ermöglicht eine einfache Ausrichtung auf neue Werkzeuge oder Werkzeugtypen. Die Zustandsbestimmung kann - verglichen mit einer Begutachtung mittels Laborgeräten - in sehr kurzer Zeit erfolgen, was insbesondere beim Einsatz in einem Aufbereitungszentrum, wo viele aufzubereitende Werkzeuge beurteilt werden müssen, von grossem Vorteil ist.

Erfindungsgemäss erfolgt die Verarbeitung der Bilddaten mittels photometrischer Stereoanalyse. Es handelt sich dabei um ein etabliertes Verfahren zur schattierungsbasierten Oberflächenrekonstruktion, basierend auf zwei oder mehr Bildern der Oberfläche. Dabei werden die Bilder mit derselben Anordnung von Oberfläche und Kamera erzeugt und nur der Beleuchtungszustand, hier namentlich die Beleuchtungsrichtung, verändert. Dadurch ergibt sich eine einfache Zuordnung der Orte auf der betrachteten Oberfläche zu den Bildpunkten in den Bildern. Für jeden Bildpunkt werden so mehrere Irradianzen bestimmt. Daraus werden Oberflächenorientierungen rekonstruiert. Dies kann - wie unten näher beschrieben - auf unterschiedliche Weise erfolgen, und liefert in einem ersten Schritt Bilder mit Oberflächenstrukturinformationen. Grundsätzlich ist es möglich, diese Bilder mittels eines Integrationsverfahrens weiter zu verarbeiten, z. B. um eine relative Höhenkarte zu erhalten. Im Rahmen des vorliegenden Verfahrens ist dieser zweite Schritt aber nicht zwingend notwendig; die Klassierung des Zustands kann auf Basis der Bilder mit Oberflächenstrukturinformationen erfolgen, ohne dass die entsprechende Vorverarbeitung einen Integrationsschritt umfasst.

Das photometrische Stereoanalyse-Verfahren wird somit nicht zum üblichen Zweck der dreidimensionalen Reproduktion einer Oberfläche eingesetzt, sondern zur Generierung von Bildern, die Oberflächenstrukturinformationen umfassen, die eine verbesserte Erkennung von Verschleisserscheinungen ermöglichen.

Erfindungsgemäss handelt es sich beim Bild mit Oberflächenstrukturinformationen um ein Höhenbild und/oder um ein Krümmungsbild. Im Höhenbild codiert jedes Pixel die relative Höhe der entsprechenden Stelle auf der Oberfläche gegenüber einer Referenzfläche. Im Krümmungsbild codiert jedes Pixel die lokale Krümmung. Es hat sich gezeigt, dass im Höhenbild Erhebungen und Vertiefungen wie sie beim Einsatz von Werkzeugen, insbesondere von Schleif- und Bohrwerkzeugen, entstehen, besonders gut sichtbar sind. Das Krümmungsbild ermöglicht eine besonders gute Erkennung feiner lokaler Defekte.

Grundsätzlich ist es möglich, der Klassierung mehrere Bilder mit Oberflächenstrukturinformationen zugrunde zu legen, die auf verschiedene Weise aus den mehreren optischen Bildern erhalten wurden, also z. B. ein Höhen- und ein Krümmungsbild. So lassen sich die Vorteile der einzelnen Bildtypen kombinieren.

Zusätzlich können weitere Bildtypen herangezogen werden, wie sie im Rahmen der photometrischen Stereoanalyse erzeugt werden können, z. B. Neigungsbilder in verschiedenen Richtungen - diese ermöglichen eine gute Erkennung von Formabweichungen, z. B. einer Schneidkante. Das zusätzliche Heranziehen eines Texturbilds kann hilfreich sein, um oberflächliche Rostschäden oder Verfärbungen zu erkennen, so dass diese von den eigentlichen Beschädigungen unterschieden werden können.

Mit Vorteil umfasst der Schritt des Vorverarbeitens ein Zuschneiden auf einen interessierenden Bereich, wobei der interessierende Bereich diejenigen Bereiche der Oberfläche des Werkzeugs umfasst, die von Verschleiss betroffen oder wo Fehler zu erwarten sind. Damit lässt sich der Verarbeitungsaufwand reduzieren und die Qualität der Klassierung verbessern.

Bei der Verschleissbestimmung eines Vollmaterial-Schaftwerkzeugs werden beim Zuschneiden insbesondere der Bereich des Auslaufs der Schneidkanten und das Schaftende weggeschnitten. In einer weiteren Ausführungsform können auch Bereiche unberücksichtigt bleiben, die sich klar ausserhalb des Schneidkantenbereichs befinden, in dem der Verschleiss erwartet wird.

Alternativ wird auf ein solches Zuschneiden verzichtet. Grundsätzlich kann das Machine-Learning-Verfahren so trainiert bzw. die Features für das Clustering so gewählt werden, dass die nicht von Verschleiss oder Fehlern betroffenen Bereiche nicht zu einer Verfälschung der Klassierung führen, d. h. Unterschiede in diesen Bereichen keinen Einfluss auf die Klassierung der Werkzeuge haben.

Bei einer ersten Gruppe von Ausführungsformen handelt es sich beim Machine-Learning-Verfahren um ein Supervised Machine-Learning-Verfahren. Geeignete Supervised-Learning-Verfahren basieren beispielsweise auf einer so genannten Support Vector Machine (SVM) oder auf einem künstlichen neuronalen Netz (artificial neural network, ANN).

Im Rahmen solcher Verfahren werden zum Generieren des einen oder der mehreren vorverarbeiteten Bilder mit Vorteil im Bild mit Oberflächenstrukturinformationen Verschleiss- oder Fehlermerkmale isoliert. Dazu können insbesondere gerade Linien, die Schneidkanten entsprechen, im Bild identifiziert und vom Bild subtrahiert werden, so dass im vorverarbeiteten Bild nur die von den geraden Linien abweichenden Strukturen, die insbesondere den Verschleissmerkmalen oder Fehlern entsprechen, übrigbleiben. Analog dazu können insbesondere ausgezeichnete Frequenzen, die sich z. B. aufgrund konstanter Abstände benachbarter Schneidkanten ergeben, identifiziert und die den identifizierten Frequenzen entsprechenden Strukturen subtrahiert werden. Auch so bleiben primär die Verschleiss- oder Fehlermerkmale im vorverarbeiteten Bild übrig.

Die entsprechende Vorverarbeitung erfolgt insbesondere durch mindestens eines der folgenden Verfahren:
a) Anwenden einer Hough-Transformation auf das Bild mit Oberflächenstrukturinformationen;
b) Anwenden einer Fast Fourier Transformation auf das Bild mit Oberflächenstrukturinformationen.

Letztlich werden im Rahmen der Hough-Transformation, wie weiter unten im Detail beschrieben, gerade Linien im Bild mit Oberflächenstrukturinformationen, die z. B. Schneidkanten des Werkzeugs entsprechen, erkannt und anschliessend die entsprechenden Bildwerte vom Bild mit Oberflächenstrukturinformationen abgezogen. Es verbleibt diejenige Bildinformation, die Verschleissmerkmalen entspricht.

Mittels Anwendung einer Fast Fourier Transformation auf das Bild mit Oberflächenstrukturinformationen werden die charakteristischen Frequenzen aufgrund der sich im Bild mit Oberflächenstrukturinformationen wiederholenden parallelen Schneidkanten ermittelt. Merkmale, die mit dieser Frequenz in den Bilddaten erscheinen, sind mit grosser Wahrscheinlichkeit mit unbeschädigten Strukturen der Werkzeugoberfläche, z. B. den Schneidkanten, verknüpft. Demgegenüber gehen Merkmale, die diese Frequenz nicht aufweisen, mit grosser Wahrscheinlichkeit auf Defekte zurück. Um das vorverarbeitete Bild zu erhalten, können somit die den Frequenzen entsprechenden Bereiche im Frequenzraum maskiert werden. Die Rücktransformation in den Ortsraum liefert dann ein Abbild der Defekte.

Mit Vorteil werden im vorverarbeiteten Bild Partikel mit Pixeln in einem vorgegebenen Helligkeitsbereich identifiziert und anhand der identifizierten Partikel mehrere der folgenden Grössen als Features für das Machine-Learning-Verfahren bestimmt:
a) Fläche der Partikel;
b) gefüllte Fläche der Partikel;
c) äquivalenter Flächendurchmesser der Partikel;
d) Fläche einer Bounding Box der Partikel;
e) Hauptachsenlänge der Partikel;
f) maximaler Feret-Durchmesser der Partikel;
g) konvexe Fläche der Partikel;
h) Nebenachsenlänge der Partikel;
i) Umkreis der Partikel;
j) Mittelwert der Pixel im Helligkeitsbereich;
k) Standardabweichung der Pixel im Helligkeitsbereich;
l) Anzahl der Pixel im Helligkeitsbereich;
m) Anzahl der Partikel.

Bei einem Partikel handelt es sich um eine zusammenhängende Region von hellen Pixeln in einem aus dem vorverarbeiteten Bild erzeugten Binärbild (bzw. analog um eine zusammenhängende Region von Pixeln eines Graustufen- oder Farbbilds, deren Helligkeitswert eine Schwelle überschreitet). Es hat sich gezeigt, dass diese Features gut dazu geeignet sind, Verschleisseffekte an Werkzeugoberflächen, insbesondere solche aus metallischen oder keramischen Materialien, anhand vorverarbeiteter optischer Bilder zu charakterisieren.

Bevorzugt werden folgende Grössen als Features für das Machine-Learning-Verfahren bestimmt:
a) Fläche der Partikel;
c) äquivalenter Flächendurchmesser der Partikel;
e) Hauptachsenlänge der Partikel;
h) Nebenachsenlänge der Partikel;
j) Mittelwert der Pixel im Helligkeitsbereich und
m) Anzahl der Partikel.

Diese Features sind dazu geeignet, zustandsrelevante Eigenschaften der vorverarbeiteten Bilder zu repräsentieren.

Bevorzugt werden die Werte der ausgewählten Features normiert. Eine spezifische Gewichtung der einzelnen Features ist möglich, um die unterschiedliche Relevanz der Features bei der Klassierung gezielt zu berücksichtigen. Diese Gewichtung kann im Anschluss an die Normierung vorgenommen oder durch den Einsatz einer featureabhängigen Norm erhalten werden.

Bei einer zweiten Gruppe von Ausführungsformen handelt es sich beim Machine-Learning-Verfahren um ein Unsupervised Machine-Learning-Verfahren, wobei in einem ersten Schritt anhand des vorverarbeiteten Bilds bzw. der mehreren vorverarbeiteten Bilder mehrere Features bestimmt und in einem zweiten Schritt ein Clustering durchgeführt wird.

Im Rahmen solcher Verfahren wird zum Generieren der mehreren vorverarbeiteten Bilder das Bild mit Oberflächenstrukturinformationen vorzugsweise mit Hilfe eines Sliding-Window-Verfahrens in mehrere überlappende Kacheln aufgeteilt, wobei für jedes einer Kachel entsprechende vorverarbeitete Bild mehrere vorgegebene Features für das Clustering bestimmt werden. Die Grösse und die Überlappung der Kacheln hängen von der Werkzeuggeometrie und der zu beurteilenden Region of Interest (ROI) ab. Insbesondere wird die Abbildung einer Werkzeugoberfläche in mindestens 4 I<acheln, insbesondere in mindestens 10 I<acheln, aufgeteilt.

Die Aufteilung in Kacheln ermöglicht ein Clustering, das lokalen Defekten Rechnung trägt. Zudem lassen sich nebst der Klassierung aus der Zuordnung der einzelnen Kacheln zu verschiedenen Clustern - entsprechend den jeweils lokalen Defekten - ergänzende Informationen zum Verschleiss des zu beurteilenden Werkzeugs gewinnen.

Bevorzugt umfassen die Features aus den vorverarbeiteten Bildern mehrere aus folgenden Gruppen:
a) ein Mittelwert, eine Varianz und/oder ein Median des mittels eines zweidimensionalen Gabor-Filters weiter verarbeiteten vorverarbeiteten Bilds;
b) eine Summe eines Binärbilds erhalten aus dem mittels des zweidimensionalen Gabor-Filters weiter verarbeiteten vorverarbeiteten Bilds;
c) Features anhand einer Analyse auf Local Binary Pattern;
d) Haralick-Textur-Features;
e) einen Mittelwert und/oder eine Standardabweichung von Pixelwerten des vorverarbeiteten Bilds.

Bevorzugt werden die Werte der ausgewählten Features normiert. Eine spezifische Gewichtung der einzelnen Features ist möglich, um die unterschiedliche Relevanz der Features bei der Klassierung gezielt zu berücksichtigen. Diese Gewichtung kann im Anschluss an die Normierung vorgenommen oder durch den Einsatz einer featureabhängigen Norm erhalten werden.

Der zweidimensionale Gabor-Filter kann auf einem vorgegebenen Kern basieren, mit dem die Bildausschnitte gefiltert werden. Alternativ wird eine sogenannte Filterbank erstellt, worin verschiedene Filterkerne mit unterschiedlichen Frequenzen und Orientierungen vorhanden sind. Das vorverarbeitete Bild wird mit allen Filtern der Filterbank gefiltert. Zuletzt werden alle Ausgabebilder der Filter zu einem einzigen kombinierten Bild zusammengerechnet (Superposition der Filter).

Andere bzw. weitere Features sind möglich. So kann es vorteilhaft sein, wenn - insbesondere nebst den Local Binary Pattern (LBP) - auch das Histogram of Gradients (HOG) zur Gewinnung von Features herangezogen wird.

Bevorzugt wird das Clustering in 3-8, insbesondere in 4-6, Klassen vorgenommen. Es hat sich gezeigt, dass mit einer geeigneten Klassenzahl eine ausreichend feine Unterteilung erreicht wird, um Werkzeuge im Hinblick auf zu treffende Massnahmen (z. B. aufbereiten, weiter verwenden, entsorgen) voneinander zu unterscheiden. Gleichzeitig ist die Klassierung auch bei einer vergleichsweise kleinen Anzahl an zu beurteilenden Werkzeugen bzw. einem relativ kleinen Trainingsset schon robust.

In gewissen Fällen kann es angezeigt sein, mehr als 8 Klassen vorzusehen, z. B. dann, wenn die Werkzeuge spezifischen Aufbereitungsparametern zugeordnet werden sollen.

Bevorzugt wird das Clustering mittels eines Gaussian-Mixture Models (GMM) oder eines k-means++-Verfahrens durchgeführt.

Gestützt auf das Clustering kann dem gesamten Werkzeug eine Zustandsklasse zugeordnet werden, die der schlechtesten identifizierten Zustandsklasse im Cluster entspricht, d. h. die Zustandsklasse wird insbesondere durch den Zustand desjenigen Bereichs des Werkzeugs (derjenigen Kachel) bestimmt, der den grössten Verschleiss aufweist.

Da jede Kachel einzeln bewertet wird, ist es möglich, diese zum jeweiligen Gesamtbild zurückzuführen und zuzuordnen. Damit ergibt sich eine Angabe, welche Zustandsklasse wie oft (in Prozent) auf dem jeweiligen Werkzeug vorkommt. Somit ist es beispielsweise möglich, den Zustand der Werkzeugoberfläche in Relation zum Neuzustand in Prozent anzugeben. Dadurch entstehen Hinweise über den Gesamtzustand eines Werkzeuges. Auch eine räumliche Zuordnung der Verschleiss- oder Fehlerstellen ist möglich.

Mit Vorteil wird anhand der Bilddaten der mehreren optischen Bilder und/oder anhand des Bilds mit Oberflächenstrukturinformationen und/oder anhand des einen oder der mehreren zugeschnittenen Bilder mit Oberflächenstrukturinformationen eine abgebrochene Schneidkante des Werkzeugs erkannt, und bei einer erkannten abgebrochenen Schneidkante wird das Werkzeug unmittelbar einer entsprechenden Zustandsklasse zugeordnet.

In diesem Fall wird das Werkzeug also nicht der Klassierung mittels Machine-Learning-Verfahren zugeführt. Es hat sich gezeigt, dass Zahnabbrüche in optischen Bildern der Werkzeugoberfläche zu Merkmalen führen, die sich klar von den übrigen optisch erfassbaren Verschleiss- oder Fehlermerkmalen unterscheiden. Deshalb führt einerseits der Einbezug von Werkzeugen mit Zahnabbrüchen zu einer negativen Beeinträchtigung der Klassierung mittels des Machine-Learning-Verfahrens. Andererseits ist es aber auch möglich, mit gängigen Bildverarbeitungsverfahren (oder einem dedizierten vorgeordneten Machine-Learning-Verfahren), Zahnabbrüche einfach zu erkennen und die entsprechenden Werkzeuge direkt der entsprechenden Zustandsklasse zuzuordnen.

Das Verfahren kann zur Ermittlung des Zustands insbesondere auf ein Schleif- oder Bohrwerkzeug zur Werkstückbearbeitung in einer Werkzeugmaschine angewandt werden, insbesondere auf ein Vollmaterial-Schaftwerkzeug.

Mit Vorteil werden separat ein erster Zustand einer mantelseitigen Schneidgeometrie und ein zweiter Zustand einer stirnseitigen Schneidgeometrie des Vollmaterial-Schaftwerkzeugs bestimmt.

Damit lässt sich den unterschiedlichen geometrischen Verhältnissen und den unterschiedlichen Anforderungen an die Intaktheit der entsprechenden Schneidkanten Rechnung tragen. So werden beispielsweise bei Fräswerkzeugen oft die stirnseitigen Schneidkanten weniger stark beansprucht als bei Bohrwerkzeugen, während die Verhältnisse bei den mantelseitigen Schneiden gerade umgekehrt sind.

Für die Klassierung eines "Gesamtzustands" können der erste Zustand und der zweite Zustand unterschiedlich erhalten und/oder unterschiedlich herangezogen werden. Im einfachsten Fall ist ein Werkzeug dann zu ersetzen, wenn mindestens einer der beiden Zustände eine Ersetzung erfordert, und das Werkzeug ist dann aufzubereiten, wenn mindestens einer der beiden Zustände eine Aufbereitung erfordert. Falls die Gesamtperformance des Werkzeugs nicht einfach dem schwächsten Glied entspricht, sondern sich aus einer Wechselwirkung der Leistung beider Werkzeugabschnitte ergibt, kann es sinnvoll sein, die Zustände auf eine komplexere Weise miteinander zu verrechnen, so dass erst eine Aufbereitung oder ein Ersatz erfolgt, wenn die Gesamtperformance dies erfordert.

Mit Vorteil werden zur Bestimmung des ersten Zustandes ein auf einer ersten Datenmenge basierender Algorithmus eingesetzt und zur Bestimmung des zweiten Zustandes ein auf einer zweiten Datenmenge basierender Algorithmus eingesetzt, wobei die erste Datenmenge und die zweite Datenmenge unterschiedlich sind.

Insbesondere sind die beiden Datenmengen im Wesentlichen disjunkt. So umfasst beispielsweise in einem Supervised-Learning-Verfahren die erste Datenmenge Bilddaten als Trainingsdaten, die den Mantelbereich abgenutzter Werkzeuge zeigen, und die zweite Datenmenge umfasst Bilddaten, die den Stirnbereich abgenutzter Werkzeuge zeigen. Eine Überlappung der ersten und der zweiten Datenmenge liegt dabei höchstens in einem Übergangsbereich (Kante oder Radius) zwischen Mantel und Stirn vor.

Nicht nur die Datenmengen können unterschiedlich sein, sondern auch die verwendeten Algorithmen, so können z. B. unterschiedliche Machine-Learning-Algorithmen oder Algorithmen mit anderen Parametern (z. B. Netztopologien bei neuronalen Netzen) eingesetzt werden.

Ein Verfahren zur Aufbereitung des Werkzeugs umfasst bevorzugt folgende Schritte:
a) Ermittlung des Zustandes eines Werkzeugs mit dem beschriebenen erfindungsgemässen Verfahren;
b) Steuern mindestens einer Einrichtung zur Aufbereitung des Werkzeugs, insbesondere mittels eines Schleifvorgangs, wenn der Zustand vorgegebene Bedingungen erfüllt.

Die vorgegebenen Bedingungen umfassen insbesondere (auch) die Klassierung des Zustandes des Werkzeugs. So können die Klassen von Beginn weg so definiert werden, dass sie durchzuführenden Massnahmen entsprechen ("weiter verwendbar", "aufzubereiten", "zu entsorgen") oder aus einer Klassierung werden die Massnahmen unmittelbar oder mittelbar abgeleitet. So kann beispielsweise der Verschleisszustand in acht Klassen 1 - 8 klassiert werden (1: neuwertig, 8: stark verschlissen), wobei die Bedingungen derart vorgegeben sind, dass bei einer Klassierung in den Klassen 1 und 2 das Werkzeug weiter benutzt wird, bei einer Klassierung in den Klassen 3 - 6 eine Aufbereitung erfolgt und bei einer Klassierung in den Klassen 7 und 8 das Werkzeug rezykliert bzw. entsorgt wird.

Der Zustand kann nicht nur als Grundlage für die Entscheidung dienen, ob eine Aufbereitung mit der entsprechenden Einrichtung erfolgen soll, sondern kann auch für die durchzuführenden Massnahmen im Rahmen der Aufbereitung relevant sein. So stehen beispielsweise mehrere Aufbereitungsschritte zur Auswahl (Reinigen, Polieren, Schleifen, mehrere Schleifvorgänge usw.), und je nach Zustand wird eine unterschiedliche Auswahl getroffen.

Insbesondere werden die Parameter des Schleifvorgangs und/oder die Bearbeitungsgeometrie der Einrichtung zur Aufbereitung des Werkzeugs anhand des ermittelten Zustandes bestimmt. Die Parameter können beispielsweise einen Schleifpfad umfassen, einen oder mehrere Zustellwerte o. ä. Die Bearbeitungsgeometrie definiert den Umfang, den Ort und die Art der Bearbeitung des Werkzeugs. Die Bestimmung der Bearbeitungsgeometrie kann direkt auf dem optischen Bild basieren und/oder auf Vearbeitungsergebnissen, z. B. der Klassierung.

Dadurch wird eine werkzeugspezifische, bedarfsgerechte Aufbereitung ermöglicht. Bei Schleifverfahren kann z. B. der (zusätzliche) Materialabtrag minimiert werden, so dass die Nutzdauer des Werkzeugs maximiert wird. Es ist zudem nicht notwendig, im Vorfeld der Aufbereitung (nochmals) eine aufwendige Untersuchung des Werkzeugs durchzuführen, weil die benötigten Daten bereits vorhanden sind.

In einer bevorzugten Ausführungsform sind ein Beleuchtungssystem zum Beleuchten einer Oberfläche des Werkzeugs mit unterschiedlichen Beleuchtungszuständen und eine Kamera zur Aufnahme mehrerer optischer Bildes der Oberfläche des Werkzeugs bei den unterschiedlichen Beleuchtungszuständen an einem ersten Einsatzort angeordnet. Am ersten Einsatzort gewonnene Daten werden in einer Datenbank abgelegt. Die Einrichtung zur Aufbereitung ist an einem zweiten Einsatzort angeordnet, und die Einrichtung zur Aufbereitung ruft Daten aus der Datenbank ab.

Dabei sind die beiden Einsatzorte entfernt voneinander und finden sich insbesondere in einer anderen Einrichtung bzw. einem anderen Werk. Die Datenbank kann zentral angeordnet sein, so dass die Daten dezentral erfasst und genutzt, aber zentral gespeichert werden. Die Datenbank kann aber auch am ersten Einsatzort oder am zweiten Einsatzort abgelegt sein, oder die Daten werden an beiden Orten vorgehalten und regelmässig synchronisiert.

Dies ermöglicht insbesondere auch, für ein bestimmtes Werkzeug relevante Daten auch dann vollständig zu erfassen und vorzuhalten, wenn das Werkzeug (jeweils nach erfolgter Aufbereitung) von verschiedenen Nutzern eingesetzt oder gar von verschiedenen Dienstleistern aufbereitet wird.

Bevorzugt ist das Werkzeug mit einer eindeutigen Kennung versehen, und die dem Werkzeug zugeordneten Daten sind in der Datenbank mit der eindeutigen Kennung verknüpft. Die eindeutige Kennung ist insbesondere in maschinenlesbarer Form am Werkzeug angebracht, z. B. als optische Markierung (Barcode, Matrixcode, alphanumerisch usw.) oder gespeichert auf einem Datenträger (z. B. RFID). Die eindeutige Kennung stellt sicher, dass eine korrekte Zuordnung erfolgt.

Alternativ werden die erfassten Daten auf einem Datenträger gespeichert. Dieser wird dann zusammen mit dem entsprechenden Werkzeug vom ersten zum zweiten Einsatzort transportiert. Grundsätzlich kann der Datenträger auch in das Werkzeug integriert sein.

In einem weiteren Fall erfolgt die Aufnahme des mindestens einen optischen Bildes unmittelbar bei der Einrichtung zur Aufbereitung.

Eine erfindungsgemässe Vorrichtung zur Ermittlung des Zustandes eines Werkzeugs umfasst
a) ein Beleuchtungssystem zum Beleuchten einer Oberfläche des Werkzeugs mit unterschiedlichen Beleuchtungszuständen;
b) eine Kamera zur Aufnahme mehrerer optischer Bildes der Oberfläche des Werkzeugs bei den unterschiedlichen Beleuchtungszuständen;
c) ein erstes Bildverarbeitungsmodul, das so konfiguriert ist, dass es Bilddaten der mehreren optischen Bilder mittels photometrischer Stereoanalyse zur Erzeugung eines Bilds mit Oberflächenstruktur-informationen verarbeitet, wobei es sich bei dem Bild mit Oberflächenstrukturinformationen um ein Höhenbild und/oder ein Krümmungsbild handelt;
d) ein zweites Bildverarbeitungsmodul, das so konfiguriert ist, dass es das Bild mit Oberflächenstrukturinformationen zur Erzeugung eines oder mehrerer vorverarbeiteter Bilder weiter verarbeitet; und
e) ein Klassifiziermodul, das so konfiguriert ist, dass es anhand des einen oder der mehreren vorverarbeiteten Bilder den Zustand des Werkzeugs in eine von mindestens zwei Klassen mittels eines Machine-Learning-Verfahrens klassiert.

Bei der Kamera handelt es sich insbesondere um eine Zeilenkamera. Mit dieser kann die Oberfläche des Werkzeugs zeilenweise erfasst werden. Zur Erfassung der Oberfläche des Mantels eines Vollmaterial-Schaftwerkzeugs wird dieses bevorzugt mittels einer Spindel schrittweise um seine Längsachse rotiert, und die Oberfläche wird zeilenweise mittels einer fest angeordneten Zeilenkamera aufgenommen. In jeder Rotationsposition wird das Werkzeug nacheinander mit den unterschiedlichen Beleuchtungszuständen beleuchtet. Es ergeben sich daraus insbesondere Bilddaten, die einer Abwicklung des Werkzeugmantels entsprechen, wobei zunächst jede Zeile mehrfach - entsprechend den unterschiedlichen Beleuchtungszuständen - erscheint. Aus diesen Bilddaten lassen sich aber auf einfache Weise, durch Zusammenfassen von Zeilen, deren Abstand der Anzahl Beleuchtungszuständen entspricht, mehrere Bilder generieren, die die Abwicklung bei den unterschiedlichen Beleuchtungszuständen zeigen.

In einer weiteren bevorzugten Ausführungsform sind das Beleuchtungssystem und die Kamera in eine Bearbeitungsmaschine mit einer Aufnahme für das Werkzeug integriert, insbesondere derart, dass das Beleuchtungssystem das Werkzeug beleuchten und die Kamera die optischen Bilder der Oberfläche des Werkzeugs aufnehmen kann, wenn das Werkzeug in der Aufnahme aufgenommen ist.

Dabei können die Bildverarbeitungsmodule und das Klassifiziermodul in einer Verarbeitungsvorrichtung aufgenommen sein, wobei die Verarbeitungsvorrichtung ganz oder teilweise in der Bearbeitungsmaschine enthalten ist oder extern von dieser angeordnet und mit ihr signalmässig verbunden ist.

Bei der Bearbeitungsmaschine kann es sich z. B. um eine Werkzeugmaschine zum Bohren oder Fräsen handeln oder um ein Bearbeitungszentrum. Bei der Aufnahme kann es sich z. B. um die Arbeitsspindel handeln, um eine Aufnahme in einem Magazin zum Vorhalten der Werkzeuge für den Werkzeugwechsel oder um eine Transportaufnahme zum Transfer des Werkzeugs zwischen Arbeitsspindel und Magazin und umgekehrt.

Von Vorteil ist also insbesondere auch eine Bearbeitungsmaschine, die eine Kamera umfasst und welche an eine Verarbeitungsvorrichtung angeschlossen ist oder diese ganz oder teilweise enthält, wobei die Verarbeitungsvorrichtung die beiden Bildverarbeitungsmodule und das Klassifiziermodul umfasst.

Eine erfindungsgemässe Werkzeugmaschinenanordnung umfasst eine Werkzeugmaschine, vorzugsweise ein Bearbeitungszentrum, ein Fräs- oder ein Bohrzentrum, und eine erfindungsgemässe Vorrichtung zur Ermittlung des Zustandes. Dabei ist die Kamera in die Werkzeugmaschine integriert oder an dieser angeordnet. Die Bildverarbeitungsmodule und das Klassifiziermodul sind in einer Verarbeitungsvorrichtung aufgenommen. Dabei ist die Verarbeitungsvorrichtung ganz oder teilweise in der Werkzeugmaschine enthalten oder extern von dieser angeordnet und mit ihr signalmässig verbunden.

Eine vorteilhafte Anordnung zur Aufbereitung eines Werkzeugs umfasst
a) eine erfindungsgemässe Vorrichtung zur Ermittlung des Zustandes eines Werkzeugs;
b) eine Einrichtung zur Aufbereitung des Werkzeugs, insbesondere mittels eines Schleifvorgangs; und
c) eine Steuerung zum Steuern der Einrichtung zur Aufbereitung, welche so konfiguriert ist, dass sie Informationen zum Zustand von der Vorrichtung zur Ermittlung erhält und die Einrichtung zur Aufbereitung des Werkzeugs in Abhängigkeit der erhaltenen Informationen steuert.

So ist der Bearbeitungsmaschine bevorzugt eine Kamera zugeordnet, mittels welcher der Verschleisszustand der in der Maschine eingesetzten Werkzeuge regelmässig überwacht werden kann, z. B. bei jedem Werkzeugwechsel. Die Bilddaten werden unmittelbar am Ort der Bearbeitungsmaschine erfindungsgemäss weiter verarbeitet, so dass anhand der Klassierung entschieden werden kann, ob das Werkzeug weiter einsetzbar ist. Ist dies der Fall, wird es im Werkzeugmagazin abgelegt. Ansonsten wird es ausgesondert, und Daten zum Verschleisszustand (und gegebenenfalls die Bilddaten oder weitere daraus gewonnene Informationen) werden in einer Datenbank gespeichert. Das ausgesonderte Werkzeug wird dann physisch zur Einrichtung zur Aufbereitung transportiert. Diese liest die dem Werkzeug zugeordneten Daten aus der Datenbank aus und steuert in deren Abhängigkeit die Einrichtung zur Aufbereitung. Das aufbereitete Werkzeug wird dann zu derselben oder zu einer anderen Bearbeitungsmaschine transportiert und gelangt dort wieder zum Einsatz.

Bei der Aufbereitung können weitere Daten herangezogen werden, z. B. bezüglich der Historie des Werkzeugs (Anzahl Nutzungszyklen, bisherige Aufbereitungen usw.) oder bezüglich den Anforderungen des Kunden für seine spezifischen Bearbeitungsvorgänge.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A, B: eine schematische Frontansicht und eine schematische Seitenansicht einer Ausführungsform einer Bildaufnahmevorrichtung zur Verwendung in einem erfindungsgemässen Verfahren zur Ermittlung eines Verschleisszustandes eines Schaftwerkzeugs;
- Fig. 2: synthetische Bilder der Mantelfläche des Schaftwerkzeugs;
- Fig. 3: Höhenbilder der Oberfläche von Schaftfräsern mit unterschiedlicher Abnutzung;
- Fig. 4: eine schematische Darstellung des Zuschneidens des Höhenbildes auf eine Region of Interest (ROI);
- Fig. 5: eine Darstellung der Vorverarbeitung des Höhenbilds mittels der Hough-Transformation;
- Fig. 6: das entsprechend vorverarbeitete Bild als Basis für die Supervised-Machine-Learning-Klassierung;
- Fig. 7: das mittels Fast-Fourier-Transformation vorverarbeitete Höhenbild als Basis für die Supervised-Machine-Learning-Klassierung;
- Fig. 8A-E: Ergebnisse eines Clusterings mittels des k-means++-Algorithmus; und
- Fig. 9: ein schematisches Blockdiagramm einer erfindungsgemässen Anlage zum Ermitteln des Verschleisszustands und zum Aufbereiten eines Werkzeugs.

Grundsätzlich sind in den Figuren gleiche Teile mit gleichen Bezugszeichen versehen.

### Wege zur Ausführung der Erfindung

Eine Ausführungsform des erfindungsgemässen Verfahrens wird nachfolgend am Beispiel der Bestimmung des Verschleisses der Hauptschneidkanten eines Vollmaterial-Schaftfräsers erläutert.

Bei Vollmaterial-Schaftfräsern sind insbesondere zwei Verschleissarten zu unterscheiden:
- Der Freiflächenverschleiss: Dabei handelt es sich um eine Abnutzung im Bereich der an die Schneidkante angrenzenden Freifläche. Diese wird durch zu hohe Schnittgeschwindigkeiten, eine niedrige Verschleissresistenz der Schneide oder eine unzureichende I<ühlmittelzufuhr begünstigt.
- Schneidkantenausbrüche: Diese können an der Schneidspitze sowie an der Freifläche entstehen. Ihre Entstehung wird begünstigt, wenn ein stark verschlissenes Werkzeug weiter verwendet wird oder wenn das Werkzeug zur Bearbeitung von zu harten Werkstücken eingesetzt wird.

Grundsätzlich erkennt das erfindungsgemässe Verfahren beide Verschleissarten. Wie weiter unten näher erläutert wird, können die Ergebnisse aber verbessert werden, wenn Schneidkantenausbrüche in einem vorgelagerten Schritt erkannt werden - z. B. durch an sich bekannte Bildverarbeitungsverfahren - und die Werkzeuge ohne Schneidkantenausbrüche dann zur Klassierung des Freiflächenverschleisses mit dem Verfahren analysiert werden.

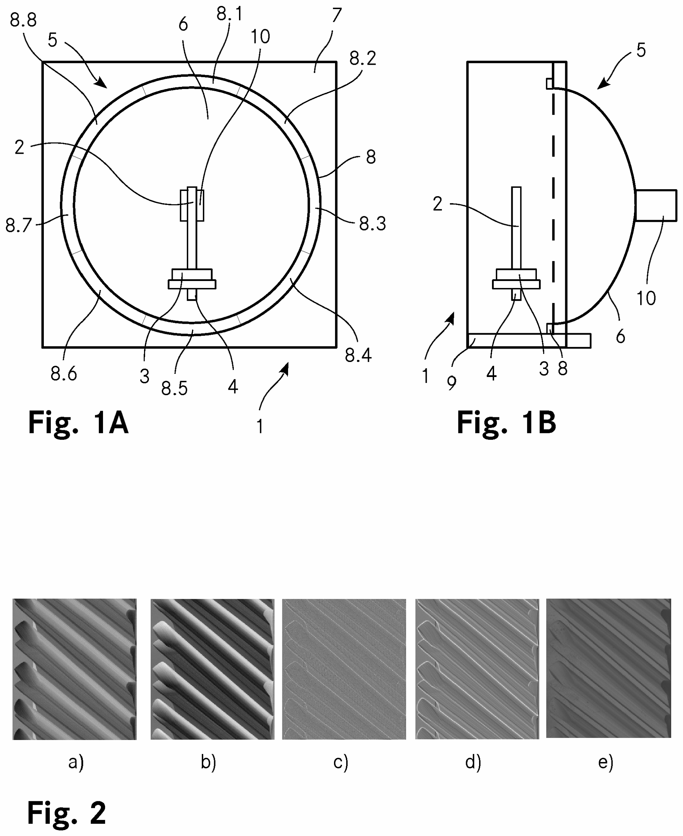

Die Figuren 1A, 1B zeigen eine schematische Frontansicht und eine schematische Seitenansicht einer Ausführungsform einer Bildaufnahmevorrichtung 1 zur Verwendung in einem erfindungsgemässen Verfahren zur Ermittlung eines Verschleisszustandes eines Schaftwerkzeugs. Entsprechende Vorrichtungen sind grundsätzlich bekannt und kommerziell verfügbar, z. B. Geräte der Serie trevista^{®} DOME der SAC Sirius Advanced Cybernetics GmbH, I<arlsruhe, Deutschland.

Mit der Bildaufnahmevorrichtung 1 werden zunächst optische Aufnahmen der Mantelfläche des Schaftfräsers 2 erzeugt, genau genommen des Arbeitsbereichs der Mantelfläche (ohne Schaft). Dazu wird der Schaftfräser 2 mit seinem Schaft in einem vertikal stehenden Spannfutter 3 einer Spindel 4 eingespannt. Der Fräser wird mit einer Dombeleuchtung 5 beleuchtet. Diese umfasst einen Dom 6 mit einer der Spindel mit dem Schaftfräser 2 zugewandten diffus reflektierenden konkaven Innenfläche. Der Dom 6 ist von einer schwarzen Grundplatte 7 umgeben. An dieser ist, den Rand des Doms 6 umlaufend, ein LED-Streifen 8 angeordnet, der 8 segmentförmige Leuchtelemente 8.1...8.8 umfasst, die selektiv ansteuerbar sind, um unterschiedliche Beleuchtungsrichtungen zu generieren. Der Dom 6 ist zudem auf einer in Bezug auf den Schaftfräser 2 radial verlaufenden linearen Führung 9 angeordnet, so dass der Fokus auf das jeweilige Messobjekt eingestellt werden kann.

Eine Zeilenkamera 10 ist hinter dem Dom 6 angeordnet und kann durch einen vertikalen Schlitz im Dom den dem Dom 6 zugewandten Bereich der Mantelfläche des Schaftfräsers 2 optisch erfassen. Im Rahmen des Ausführungsbeispiels handelt es sich um eine im Handel erhältliche 8K-Monochrom-Zeilenkamera. Diese nimmt eine Pixelzeile mit 8192 Bildpunkten in Graustufen pro Aufnahme auf. Beim verwendeten Objektiv handelt es sich um ein Präzisionsobjektiv mit Brennweite 105 mm und einer Blende von f/5.6.

Die Spindel 4 mit dem Spannfutter 3 ist um seine vertikale Achse mittels eines Motors mit Encoder präzise drehbar, so dass in einer vollständigen Umdrehung die gesamte Mantelfläche mit der Zeilenkamera 10 erfasst werden kann. In jeder Drehstellung nimmt die Zeilenkamera 10 jeweils eine Pixelzeile auf. Die Zeilenkamera 10 und die Beleuchtungssegmente 8.1...8 werden für jede Bildaufnahme gemeinsam getriggert.

Der zu untersuchende Schaftfräser 2 wird in das Spannfutter 3 der oben beschriebenen Bildaufnahmevorrichtung 1 eingespannt. Der Abstand des Doms 6 zum Schaftfräser 2 wird so eingestellt, dass eine bestmögliche Beleuchtung des zu untersuchenden Bereichs des Werkzeugmantels erreicht und eine Fokussierung der hinter dem Dom 6 angeordneten Zeilenkamera 10 auf diesen Bereich ermöglicht wird. Das Werkzeug wird schrittweise um seine Längsachse gedreht, wobei in jeder Drehposition jeweils vier Bilder mit unterschiedlicher Beleuchtungsrichtung aufgenommen werden. Zur Veränderung der Beleuchtungsrichtung werden vier der gleichmässig am Umfang des Doms 6 segmentweise angeordneten Leuchtelemente 8.1...8.8 des LED-Streifens 8 selektiv angesteuert:

| **Bild** | **Segment** | **Segmentwinkel** (gemessen von vertikal oben) | **Richtung** |
|---|---|---|---|
| 1 | 8.8 | 292.5 - 337.5° | oben links |
| 2 | 8.2 | 22.5 - 67.5° | oben rechts |
| 3 | 8.4 | 112.5 - 157.5° | unten rechts |
| 4 | 8.6 | 202.5 - 247.5° | unten links |

Die beschriebene Vorrichtung ermöglicht eine Aufnahme der gesamten Mantelfläche innert weniger Sekunden. Entsprechend wird ein hoher Durchsatz an zu beurteilenden Werkzeugen ermöglicht.

Da zwischen der Aufnahme der Bilder mit unterschiedlicher Beleuchtungsrichtung die relative Anordnung zwischen Kamera und Werkzeug nicht verändert wird, können Bildpunkte der einzelnen Bilder derselben Drehposition eindeutig einander zugeordnet werden, und es lassen sich jedem Bildpunkt der erfassten Zeile ohne Weiteres mehrere Irradianzen zuordnen.Die zeilenweise Aufnahme erfolgt, bis die gesamte Mantelfläche abgetastet wurde, also der Schaftfräser 2 im Spannfutter 3 um 360° rotiert wurde. Die einzelnen Pixelreihen, die derselben Beleuchtung entsprechen, werden dann jeweils zu einem Bild zusammengeschnitten. Es ergeben sich also vier Abbildungen der Mantelfläche des Werkzeugs. Aus diesen Abbildungen werden nun synthetische Bilder abgeleitet:
a) ein Neigungsbild in X-Richtung;
b) ein Neigungsbild in Y-Richtung;
c) ein Krümmungsbild;
d) ein Höhenbild;
e) ein Texturbild.

Die kommerziell erhältliche Bildverarbeitungssoftware Coake^{®} der erwähnten SAC Sirius Advanced Cybernetics GmbH ermöglicht die Generierung solcher synthetischer Bilder aus den mit der Bildaufnahmevorrichtung 1 generierten Abbildungen.

Grundsätzlich kann in an sich bekannter Weise aus den aufgenommenen Bildintensitäten, den bekannten Eigenschaften der Beleuchtung sowie Oberflächenabstrahleigenschaften zu jedem Punkt der Oberfläche (Pixel) eine Flächennormale bestimmt werden, vgl. z. B. B. K. P. Horn, M. J. Brooks: «Shape from Shading», The MIT Press, Cambridge MA, 1989.

Aus den Flächennormalen können nun die Neigungsbilder in X- bzw. Y-Richtung bestimmt werden. Diese ergeben sich aus der Helligkeitsänderung in Abhängigkeit der jeweiligen Richtung. Die entsprechenden Ableitungen können mittels Finiten Differenzen, Sobel-Operatoren oder mittels anderen Ableitungskernels berechnet werden.

Auf Basis der beiden Neigungsbilder kann durch Integration eine Höhenkarte bestimmt werden. Dazu sind verschiedene Verfahren bekannt, die insbesondere vermeiden, dass sich Abweichungen und Ambiguitäten aufgrund der Integration aufsummieren und damit zu verfälschten Ergebnissen führen. Das Höhenbild entspricht der Höhenkarte.

Aus der Höhenkarte *Z*(*x*, *y*) lässt sich das Krümmungsbild *K*(*x, y*) wie folgt berechnen: $K \left(x, y\right) = - \frac{{\partial }^{2} Z}{\partial {x}^{2}} \frac{{\partial }^{2} Z}{\partial {y}^{2}} + {\left(\frac{{\partial }^{2} Z}{\partial x \partial y}\right)}^{2} {\left(1+{\left(\frac{\partial Z}{\partial x}\right)}^{2}+{\left(\frac{\partial Z}{\partial y}\right)}^{2}\right)}^{- \frac{3}{2}}$

Dieser Ansatz berücksichtigt die I<rümmungen in beiden Richtungen, ist allerdings herausfordernd in der Anwendung wegen störenden Bildrauschens. Es sind Techniken und Filter bekannt, um diesem Problem zu begegnen.

Nähere Angaben zum Errechnen der entsprechenden Bilder finden sich in der Literatur, z. B. in A. Distante, C. Distante, Handbook of Image Processing and Computer Vision. Vol. 3, Chapter 5: Shape from Shading, Springer Nature Switzerland AG, 2020; R. J. Woodham, "Determining surface curvature with photometric stereo, Proceedings, 1989 International Conference on Robotics and Automation, Scottsdale, AZ, USA, 1989, pp. 36-42 vol.1, doi: 10.1109/ROBOT.1989.99964.

Das Texturbild entspricht im Wesentlichen der optischen Abbildung der Oberfläche.

Die unterschiedlichen Bilder sind in der Figur 2 dargestellt:
a) Neigungsbild in x-Richtung;
b) Neigungsbild in y-Richtung;
c) I<rümmungsbild;
d) Höhenbild;
e) Texturbild.

Es ist gut sichtbar, dass sich die Defekte im Bereich der Schnittkante auf dem Krümmungs- und Höhenbild besonders gut von der Bildumgebung abheben. Die Neigungsbilder sind aufgrund der grossen Unterschiede in der Neigung vor und hinter der Schnittkante schwerer zu interpretieren, und im Texturbild ist der Kontrast deutlich geringer.

Im beschriebenen Ausführungsbeispiel wird für die weitere Verarbeitung primär das Höhenbild beigezogen, da dieses in Bezug auf die Erkennung von Defekten gute Ergebnisse liefert. Ergänzend oder alternativ können auch weitere synthetische Bilder herangezogen werden, so z. B. das x- und/oder y-Neigungsbild, die z. B. gut zur Analyse profilierter Werkzeuge und Gewindeschneider geeignet sind, oder das I<rümmungsbild, das die Erkennung feiner und kleiner Defekte im Mikrometerbereich ermöglicht. Das Texturbild demgegenüber eignet sich besonders gut zur Erkennung von Defekten an einer Beschichtung.

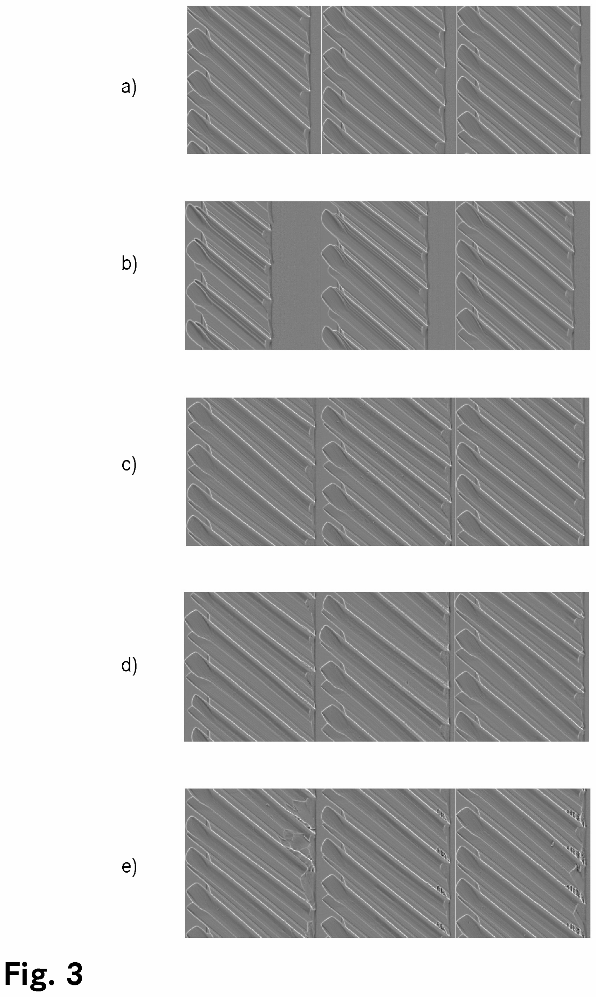

In der Figur 3 sind nun Höhenbilder der Oberfläche von Schaftfräsern gezeigt, wobei die Schaftfräser eine unterschiedliche Abnutzung aufweisen. Es sind jeweils drei Bilder pro Klasse dargestellt:
a) sehr guter Zustand, Neuware;
b) sehr guter Zustand, neuwertig, unmittelbar nach der Aufbereitung;
c) guter Zustand, Gebrauchsspuren;
d) mässiger Zustand, Gebrauchsspuren und Schäden;
e) schlechter Zustand, grosse Schäden wie Ausbrüche oder Zahnabbrüche.

Es ist gut aus den Abbildungen ersichtlich, dass die relevanten Abnutzungserscheinungen gut im Höhenbild erkennbar sind.

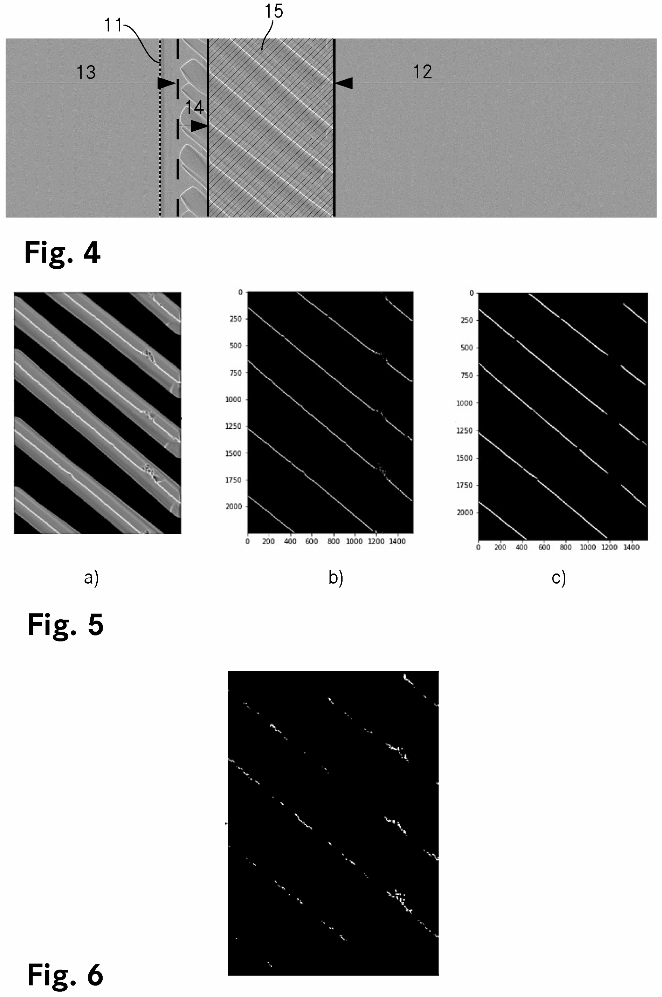

Als nächstes wird das Höhenbild auf eine Region of Interest (ROI) 15 zugeschnitten. So kann sich die nachfolgende Verarbeitung auf denjenigen Bereich der Werkzeugoberfläche beschränken, in dem Verschleiss erwartet wird. In der Figur 4 ist das Zuschneiden dargestellt, wobei im gezeigten Höhenbild das Schaftende 11 links positioniert ist und die Stirn rechts. Auf der rechten Seite, also der Stirnseite, wird das äusserste weisse Pixel gesucht und bis zu diesem zugeschnitten (Schritt 12). Auf der linken Seite wird zunächst ebenfalls bis zum äussersten weissen Pixel zugeschnitten (Schritt 13) und zusätzlich noch eine konstante Breite, um zum Schneidenende zu gelangen (Schritt 14). Die Breite kann im Wesentlichen für alle Schaftfräser gleich gewählt werden, da der Abstand immer ungefähr gleich ist.

Das zugeschnittene Höhenbild bildet nun die Basis für die nachfolgende Klassierung mittels eines Machine-Learning-Verfahrens. Im Folgenden werden zwei Verfahrensvarianten dargestellt, zunächst ein Supervised-Machine-Learning-Verfahren, danach ein Unsupervised-Machine-Learning-Verfahren.

### Supervised Machine Learning

Im Rahmen des Supervised-Machine-Learning-Verfahrens soll im Rahmen des dargestellten Ausführungsbeispiels einem Werkzeug anhand des Höhenbildes seiner Oberfläche eine Verschleissklasse zugeordnet werden, die bestmöglich einer Verschleissklasse entspricht, wie sie ein erfahrener Experte bestimmen würde.

Praktisch bewerten Experten ein solches Werkzeug, indem sie die grössten Verschleisspunkte suchen. Diese Punkte bestimmen, wie stark das gesamte Werkzeug verschlissen ist. Das heisst, die Klassierung, welche die Experten vergeben, hängt von einem bestimmten Bereich auf dem Werkzeug ab. Dieser Bereich bestimmt den Schweregrad des Verschleisses und nicht das Gesamtbild des Werkzeuges. Durch die Klassierung fällt jedoch das Werkzeug als Ganzes in diese Klasse. Diese Problematik wird im Hinblick auf das Supervised-Machine-Learning-Verfahren mit einer spezifischen Datenvorbereitung angegangen.

Im Rahmen der Datenvorbereitung wird das zugeschnittene Höhenbild so vereinfacht, dass nur noch die Verschleissflächen sichtbar sind, auf die es für die Klassierung letztlich ankommt. Im Folgenden werden zwei Methoden für die Datenvorbereitung vorgestellt:

### 1. Hough-Transformation

Mit einer so genannten Hough-Transformation werden gerade Linien auf einer Abbildung detektiert (vgl. US 3,069,654, P. V. C. Hough). Die im Höhenbild detektierten, den Schneidkanten entsprechenden, geraden Linien werden vom zugeschnittenen Höhenbild abgezogen, so dass im Wesentlichen ein vorverarbeitetes Bild generiert wird, das nur noch die Verschleissmerkmale zeigt. Dieses vorverarbeitete Bild lässt sich dann zuverlässig klassieren, weil im Wesentlichen sämtliche darin enthaltenen Merkmale für die Klassierung relevant sind.

Bevor die eigentliche Hough-Transformation erfolgt, werden die Schneidkanten freigeschnitten: Da der Verschleiss hauptsächlich auf der Schneidkante liegt, können die anderen Bereiche im Bild eliminiert werden. Dies ermöglicht es, die Datenmenge und die Berechnungszeit zu reduzieren. Nach dem Freischneiden ergibt sich die Situation in Fig. 5a).

Das Bild wird nun mittels Wandlung in ein Binärbild und mit Hilfe eines Canny-Edge-Detektors zu einem I<antenbild weiter verarbeitet (Figur 5b). Mit einer Hough-Transformation werden dann die geraden Kanten detektiert und zurück in ein Bild transformiert. Dieses Bild enthält nun noch diejenigen Anteil der Kanten, die gerade verlaufen (Figur 5c). Subtrahiert man somit dieses Bild vom I<antenbild, bleiben nur noch die Verschleissmerkmale übrig. Dieses vorverarbeitete Bild mit den Verschleissmerkmalen wird dann als Basis für die Supervised-Machine-Learning-Klassierung verwendet. Es ist in der Figur 6 wiedergegeben.

### 2. Fast Fourier Transformation

Bei der Vorverarbeitung mittels Fast Fourier Transformation (FFT) werden die ausgeprägten Frequenzen im Bild der Werkzeugoberfläche entfernt, so dass noch die Defekte übrigbleiben, welche naturgemäss nicht diese Frequenzen aufweisen. Die Frequenzen ergeben sich aus den parallelen Schneidkanten und Schleifspuren. Sie lassen sich wie allgemein bekannt durch eine FFT in Bilddaten identifizieren.

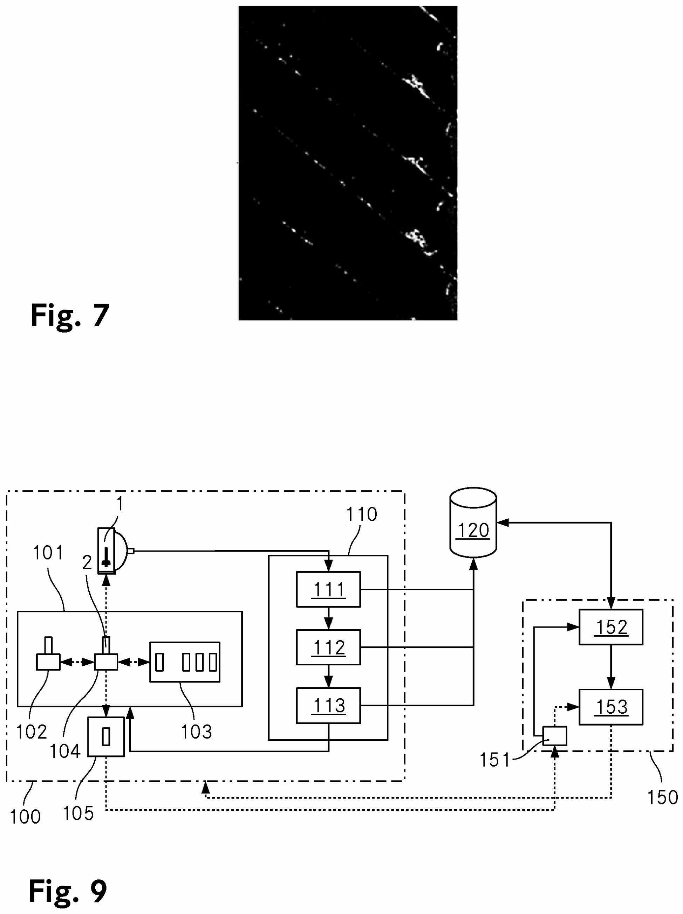

I<onkret wird zunächst eine FFT auf das vorzuverarbeitende Bild angewandt. Daraus ergeben sich die dominanten Frequenzen. Das stärkste Signal wird vom Winkel der Schneidkante herrühren. Gestützt auf das transformierte Bild lässt sich somit dieser Winkel bestimmen. Das ursprüngliche vorzuverarbeitende Bild wird nun um den bestimmten Winkel gedreht, so dass die Schneidkanten im gedrehten Bild horizontal verlaufen. Das gedrehte Bild wird nun wiederum einer FFT unterzogen und dadurch in den Frequenzraum transformiert. Danach werden mithilfe einer Maske die unerwünschten Frequenzen (entsprechend den geraden, intakten Schneidkanten) eliminiert. Das dadurch erzeugte neue Bild im Frequenzraum wird dann mittels FFT rücktransformiert und um den anfänglich bestimmten Winkel zurück gedreht. So wird ein Bild erhalten, in dem nur noch die unregelmässigen Strukturen, insbesondere die Defekte, vorhanden sind. Es kann nun noch ein Threshold angewandt werden, um dieses resultierende Bild in das vorverarbeitete Bild mit den Verschleissmerkmalen zu verarbeiten, das als Basis für die Supervised-Machine-Learning-Klassierung dienen soll. Dieses vorverarbeitete Bild ist in der Figur 7 dargestellt.

Als nächstes werden nun die Features für den Machine Learning Classifier generiert. Dabei werden Merkmale gesucht, die möglichst aussagekräftig sind für die Verschleissklasse der zu beurteilenden Werkzeuge. Die Features basieren auf Formdeskriptoren von Partikeln. Bei einem Partikel handelt es sich um eine zusammenhängende Region von hellen Pixeln (1) im Binärbild. Sie lassen sich durch gängige Bildverarbeitungsverfahren identifizieren. Im Rahmen des Ausführungsbeispiels werden die folgenden 13 Features (bzw. eine Auswahl davon) ermittelt:

| **Nr.** | **Feature** | **Definition** |
|---|---|---|
| a) | Fläche der Partikel | Anzahl weisse Pixel eines Partikels |
| b) | gefüllte Fläche der Partikel | Anzahl weisse Pixel eines Partikels, wenn alle Löcher gefüllt werden |
| c) | äquivalenter Flächendurchmesser der Partikel | Durchmesser eines Kreises mit der gleichen Fläche wie das Partikel |
| d) | Fläche einer Bounding Box der Partikel | Anzahl Pixel innerhalb eines (rechteckigen) Begrenzungsrahmens |
| e) | Hauptachsenlänge der Partikel | Länge der Hauptachse einer Ellipse, die die gleichen normierten zweiten zentralen Momente wie das Partikel hat |
| f) | maximaler Feret-Durchmesser der Partikel | längster Abstand zwischen zwei Pixeln des Partikels |
| g) | konvexe Fläche der Partikel | Anzahl der Pixel eines konvexen Hüllenbildes des Partikels |
| h) | Nebenachsenlänge der Partikel | Länge der Nebenachse der Ellipse, die die gleichen normierten zweiten zentralen Momente wie das Partikel hat. |
| i) | Umkreis der Partikel | Länge der Linie, die durch die Zentren der Randpixel geht. |
| j) | Mittelwert | Mittelwert der Pixel im Helligkeitsbereich |
| k) | Standardabweichung | Standardabweichung der Pixel im Helligkeitsbereich |
| l) | Anzahl der Pixel | Anzahl der Pixel im Helligkeitsbereich |
| m) | Anzahl der Partikel | gesamte Anzahl der identifizierten Partikel |

Um die Features trotz unterschiedlicher Wertebereiche miteinander vergleichen zu können, werden sie normiert. Dies erfolgt mithilfe der sogenannten L2-Norm, die sich wie folgt berechnet: $\begin{matrix}{x}_{norm} = \frac{x}{{\left‖x\right‖}_{2}} \\ {\left‖x\right‖}_{2} = \sqrt{{x}_{1}^{2} + {x}_{2}^{2} + {x}_{3}^{2} + ⋯ + {x}_{m}^{2}} .\end{matrix}$

Bei Vollmaterial-Schaftfräsern kann beispielsweise als Feature-Vektor ein reduzierter Vektor eingesetzt werden kann, der nur die folgenden Features umfasst:
a) Fläche der Partikel;
c) äquivalenter Flächendurchmesser der Partikel;
e) Hauptachsenlänge der Partikel;
h) Nebenachsenlänge der Partikel;
j) Mittelwert der Pixel im Helligkeitsbereich und
m) Anzahl der Partikel.

Je nach Werkzeugtyp können andere I<ombinationen sinnvoll sein. Diese können anhand von I<orrelationsanalysen ermittelt werden, wobei von Features, die eine gegenseitige I<orrelation über einem gewissen Schwellenwert (z. B. 0.95) aufweisen, nur eines in den Vektor einfliesst.

Die Klassierung der Vektoren erfolgt dann mithilfe einer Support Vector Machine (SVM). Die Ergebnisse werden weiter unten diskutiert.

### Unsupervised Machine Learning

Im Rahmen des Unsupervised-Machine-Learning-Verfahren werden in den untersuchten Daten zusammengehörende Gruppen (im Folgenden «Cluster») identifiziert. Dazu werden im Rahmen des vorliegenden Ausführungsbeispiels einzelne Ausschnitte des zugeschnittenen Höhenbildes betrachtet und geclustert.

Die Ausschnitte werden mit einem Sliding-Window-Ansatz mit Überlappung erzeugt. Dabei wird mit einem vordefinierten Fenster (Window) und einer Schrittweite durch das Eingangsbild iteriert. Von den generierten Bildausschnitten werden die Features berechnet. Diese können danach in Form einer Punktwolke im Feature-Raum dargestellt werden, wobei jeder Punkt einen Bildausschnitt repräsentiert. Beispielsweise können Fenstergrössen von 400 x 400 px und eine Schrittweite von 220 px eingesetzt werden.

Für das Unsupervised-Machine-Learning werden andere Features eingesetzt als die oben genannten, insbesondere deshalb weil nun geeignete Features für einzelne, kleine Bildausschnitte benötigt werden. Der Fokus wird auf Texturfeatures gelegt, da ein Schaden am Werkzeug markante Einflüsse auf die Textur hat. Die Normierung erfolgte wie oben beschrieben mit der L2-Norm. Mit den folgenden Methoden wurden für jeden Bildausschnitt eine gewisse Anzahl von Features für die weitere Verarbeitung ermittelt:
- 2d-Gabor-Filter;
- Local Binary Patterns (LBP)
- Haralick-Features;
- histogrammbasierte Features.

Die Methoden werden im Folgenden beschrieben.

Mit dem 2D-Gabor-Filter ist es möglich, unregelmässige Strukturen zu detektieren. Er besteht aus einem Gaussschen Filterkern, welcher mittels Faltung mit dem Bild verrechnet wird. Bei dem Filterkern können drei Parameter eingestellt werden. Es handelt sich um den Parameter Theta, die Frequenz und die Standardabweichung. Theta bestimmt die Ausrichtung des Kerns in Grad. Dabei werden alle Merkmale, welche in gleicher Richtung wie der Kern sind, hervorgehoben. Das heisst, wenn der Wert von Theta dem Winkel der Schneiden entspricht, werden diese und die Schleifspuren im gefilterten Bild hervorgehoben.

Die ideale Frequenz wurde durch Versuche ermittelt. Grundsätzlich entspricht eine kleinere Frequenz einer höheren Auflösung. Auch die geeignete Standardabweichung wird anhand der gegebenen Werkzeuggeometrie empirisch ermittelt.

Aus jedem der transformierten Bildausschnitte lassen sich dann aus der Gesamtheit der jeweiligen Pixelwerte beispielsweise folgende Features bilden:
a) den Mittelwert des Graustufenbildes;
b) die Varianz des Graustufenbildes;
c) den Median des Graustufenbildes;
d) die Summe des mittels eines Thresholds aus dem Graustufenbild erzeugten Binärbilds.

Mit sogenannten Local Binary Patterns (LBP) lassen sich lokale Muster in einem Bild analysieren. Dabei wird die Anzahl der vorkommenden Muster in einem Histogramm festgehalten. Ein Muster entspricht jeweils einem Binärcode, der aus einem Vergleich eines Zentralpixels mit Nachbarpixeln generiert wurde, indem jedem Nachbarpixel der Wert 1 zugeordnet wird, wenn sein Helligkeitswert demjenigen des Zentralpixels entspricht oder diesen übersteigt und der Wert 0 sonst. Aus der geordneten Folge dieser Bitwerte ergibt sich dann der Binärcode.

Beim LBP gibt es drei vorgebbare Parameter, nämlich den Radius, die Anzahl I<onturpunkte und die Methode. Der Radius bestimmt, welche Nachbarpixel analysiert werden, und die Anzahl I<onturpunkte entspricht der Anzahl Nachbarpixel auf diesem Radius (also z. B. 8 Konturpunkte bei Radius 1 oder 16 I<onturpunkte bei Radius 2). Es hat sich gezeigt, dass ein Radius 1 bei Verschleissflächen von Vollmaterial-Schaftfräsern gute Ergebnisse liefert.

Als Methode zum Generieren des Binärcodes wurden nur uniforme Pattern einzeln erfasst und alle nicht-uniformen Pattern einem weiteren Bin zugeordnet. Uniforme Pattern sind dabei diejenigen, die maximal zwei 0-1- oder 1-0-Übergänge aufweisen. Bei 8 I<onturpunkten (Radius 1) ergeben sich so 58 verschiedene uniforme Pattern (entsprechend 58 Bins) und ein weiterer Bin für alle nicht-uniformen Pattern. Die 59 Features werden durch die entsprechenden Werte im Histogramm gebildet.

Die Haralick-Features werden von der Graustufenmatrix (Grayscale co-occurrence matrix, GLCM) abgeleitet, die zusammenfasst, welche Pixelpaar wie oft vorkommen, wobei die Pixelpaare horizontal, vertikal oder diagonal betrachtet werden (Haralick R. M., Shanmugam K. & Dinstein I. Textural Features for Image Classification. IEEE Transactions on Systems, Man, and Cybernetics3, 610-621 (1973)). Als Distanz der Pixel eines Pixelpaars wird vorliegend 1 gewählt (Nachbarpixel). Aus der GLCM wurden die folgenden 14 Features in allen vier möglichen Pixelpaarrichtungen berechnet, insgesamt also 56 Features:

| **Feature** | **Beschreibung** |
|---|---|
| Angular Second Moment | Sind in der GLCM wenige grosse Werte, wird das Mass gross. |
| | Sind alle Werte ähnlich, wird das Mass klein. |
| Inverse Difference Moment/Homogeneity | Der Wert ist hoch, wenn die meisten Einträge in der GLCM auf der Diagonale liegen. Dies ist der Fall, wenn die Untersuchungsobjekte lokal homogen sind. |
| Correlation | Mass für die lineare Abhängigkeit der Grauwerte benachbarter Pixel. Wenn die Skala der Textur viel grösser als die Distanz zwischen den benachbarten Pixeln ist, wird der Wert gross. Ist die Texturskala aber in der Grössenordnung der Distanz, wird der Wert klein. |
| Contrast | Liegen die meisten Einträge in der GLCM weit abseits der Diagonalen, ist dies ein Hinweis auf eine hohe lokale Variation der Grauwerte. |
| Entropy | Mass für die Ordnung oder Unordnung innerhalb eines Objektes. Der Wert ist hoch, wenn die GLCM-Werte relativ ähnlich sind. Liegen sie nahe bei Eins oder Null, sind die Pixelnachbarschaften ungleich verteilt und das Mass wird klein. |
| Variance | Dieses Mass gibt Aufschluss über die Abweichung der Einträge in der GLCM vom Mittelwert, grössere Grauwertunterschiede werden stärker gewichtet. |
| Sum Average | Durchschnittliche Summe der Graustufen |
| Sum Variance | Varianz der Summe der Graustufen |
| Sum Entropy | Gleichmässige (flache) Verteilung der Summe der Graustufen hat maximale Entropie |
| Difference Variance | Varianz der Differenz der Graustufen |
| Difference Entropy | Gleichmässige (flache) Verteilung der Differenz der Graustufen hat maximale Entropie |
| Information Measure of Correlation 1 | Normalisierter Informationsgehalt der gemeinsamen Entropien |
| Information Measure of Correlation 2 | Unterschied zwischen der gemeinsamen Entropie und der gemein-samen Entropie unter der Annahme der Unabhängigkeit |
| Maximal Correlation Coefficient | Mass zur I<onvergenzgeschwindigkeit der zugrundeliegenden Markov-Kette |

Bei den histogrammbasierten Features handelt es sich um den Mittelwert und die Standardabweichung der Pixelwerte eines Bildausschnittes.

Die Menge der gesamten (Textur-)Features kann durch geeignete Massnahmen, wie I<orrelationsanalyse, auf die wesentlichen und aussagekräftigen Features reduziert werden. Die reduzierte Menge kann durch eine weitere Dimensionsreduktion angenähert werden, beispielsweise durch Hauptkomponentenanalyse (PCA) auf beispielsweise 3 Hauptachsen. Das Clustering erfolgt dann mit einem entsprechenden Clustering-Algorithmus. Dazu können beispielsweise der k-means++-Algorithmus oder ein Gaussian Mixture Model (GMM) eingesetzt werden.

Im Rahmen des Ausführungsbeispiels soll jede der Abbildungen einer der folgenden vier Verschleissklassen zugeordnet werden:
- Klasse NEU (Neuwerkzeug)
- Verschleissklasse 1 (geringer Verschleiss)
- Verschleissklasse 2 (mittlerer Verschleiss)
- Verschleissklasse 3 (starker Verschleiss)

Somit wird der k-means++-Algorithmus mit dem Ziel des Clusterns in eine vorgegebene Anzahl Klassen auf die Daten angewandt. Im Rahmen des Algorithmus werden entsprechend viele Clusterzentren definiert und nach bestimmten Kriterien in die Punktwolke gesetzt. Die Datenpunkte werden jeweils dem nächstliegenden Clusterzentrum zugewiesen. Pro Clusterzentrum wird aus den zugewiesenen Datenpunkten der Mittelwert berechnet und das Zentrum entsprechend verschoben. Dies wird so lange durchgeführt, bis sich die Clusterzentren nicht mehr verschieben.

Eine Analyse der Ergebnisse mittels der so genannten Elbow Method hat ergeben, dass eine Klassenzahl von 4, 5 oder 6 die Struktur der Daten gut abbilden sollte. Gemäss einer Silhouetten-Analyse ergab sich für die Clusterzahl 2 der beste sog. Silhouettenkoeffizient. Diese Anzahl würde aber keine ausreichend feine Differenzierung des Werkzeugverschleisses erlauben. Für die Clusterzahl 4 ergibt sich der zweitbeste Silhouettenkoeffizient. Auch auf Basis dieser Betrachtung erscheint somit die Anzahl von vier Klassen sinnvoll.

Auch beim GMM-Clustering-Algorithmus wird die Klassenanzahl vorgegeben. Dieser Algorithmus geht davon aus, dass die Cluster gaussverteilt sind, es wird daher pro Klasse eine Gaussverteilung in die Daten gefittet. Die Silhouettenanalyse hat ergeben, dass - nebst der wenig hilfreichen Klassenzahl 2 - gute I<oeffizienten für Clusterzahlen 4 und 5 erhalten werden. Auch hier erscheint die Vorgabe von vier Klassen somit sinnvoll.

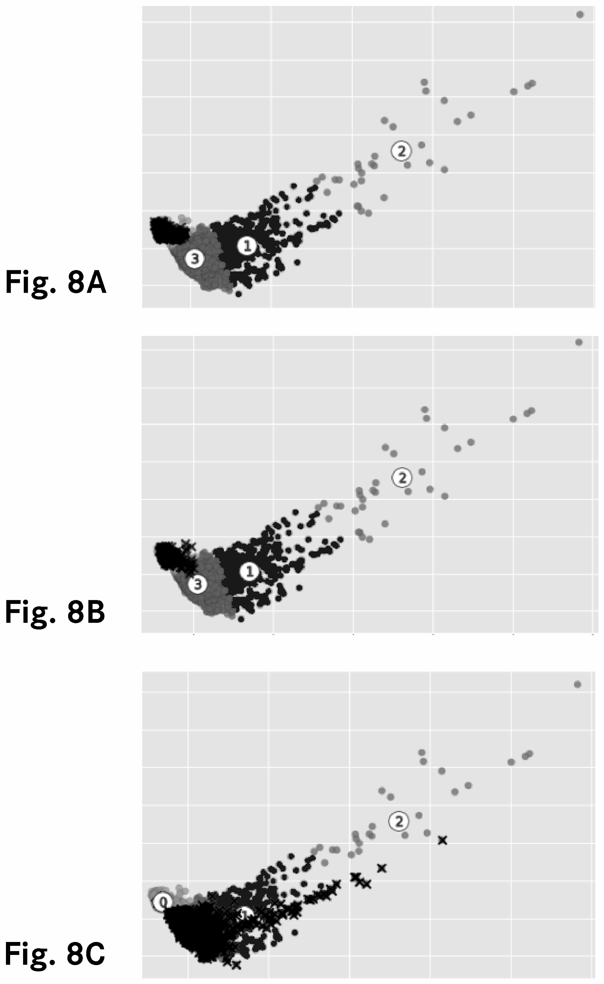

Die Ergebnisse des Clusterns mittels k-means++ ist in den Fig. 8A-D dargestellt. Die Punktwolke wurde in vier Gruppen eingeteilt mit den Clusterzentren, die mit den weissen nummerierten Kreisen markiert sind. In den Fig. 8A-D ist jeweils eine Gruppe von Werkzeugen mittels schwarzer Kreuze hervorgehoben:

### Fig. 8A Neuwerkzeuge;

Die Neuwerkzeuge füllen den Cluster 0 sehr gut aus. Neuwerkzeuge können somit zuverlässig im Cluster 0 klassiert werden.

### Fig. 8B aufbereitete Werkzeuge;

Bei den Werkzeugen unmittelbar nach der Aufbereitung besteht eine geringfügige Streuung in den Cluster 3. Wiederum wurden aber die meisten Werkzeuge - analog den Neuwerkzeugen - dem Cluster 0 zugeordnet, was für frisch aufbereitete Werkzeuge sinnvoll erscheint.

### Fig. 8C Verschleissklasse 1 gemäss Klassierung durch Experten;

Die Verschleissklasse 3 besetzt den Cluster 3 sehr gut. Es ist allerdings auch eine Streuung in den Cluster 1 ersichtlich, ein Strang erstreckt sich sogar in den Cluster 2: Die Analyse hat gezeigt, dass die entsprechenden Datenpunkte alle von demselben Werkzeug herrühren, das sehr starke Verschmutzungen im Spanraum aufgewiesen hat.

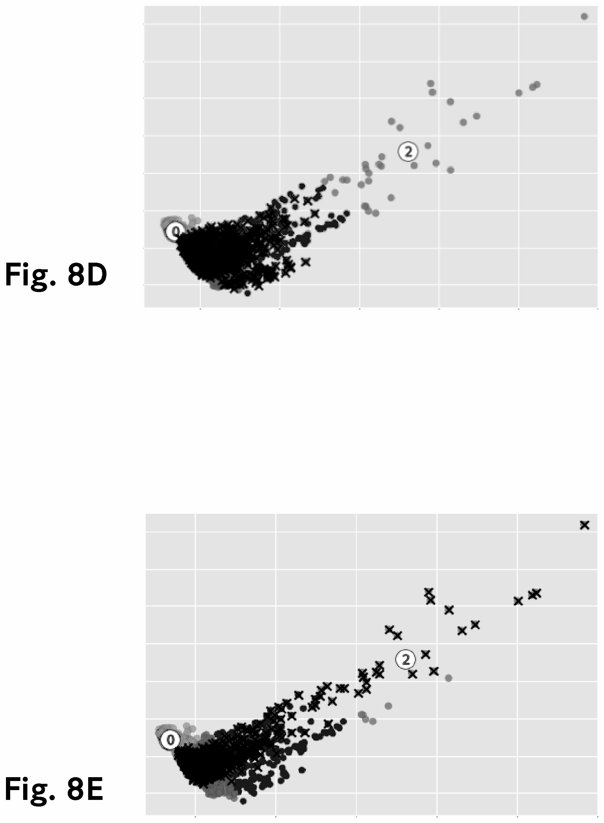

### Fig. 8D Verschleissklasse 2 gemäss Klassierung durch Experten;

Die Verschleissklasse 2 füllt den Cluster 1 gut aus, mit Elementen im Cluster 3, entsprechend den wenig verschlissenen Bereichen der Oberfläche. Ausreisser in den Cluster 2 sind nicht vorhanden.

### Fig. 8E Verschleissklasse 3 gemäss Klassierung durch Experten.

Die Streuung erstreckt sich hier durch alle Cluster 1, 2 und 3. Dies deutet auf Bereiche mit grossem Verschleiss hin.

Die Ergebnisse des Clusterings mittels GMM sind aus qualitativer Sicht denjenigen des kmeans++-Clustering sehr ähnlich.

Um nun zu prüfen, ob die Zuordnung der Verschleissklassen zu den Werkzeugen mit der Klassierung der Experten übereinstimmt, müssen die Werkzeuge einzeln analysiert werden. Hierbei ist zu beachten, dass auch stark verschlissene Werkzeuge in der Regel Regionen aufweisen, wo der Verschleiss gering ist - entscheidend für die Zuordnung zu einer Verschleissklasse sind somit diejenigen Bildausschnitte mit grossem Verschleiss. Im Rahmen des Unsupervised-Machine-Learning wurde der Ansatz verwendet, wonach die bestimmte Verschleissklasse eines Werkzeugs stets dem grössten vorkommenden Verschleisspunkt des Werkzeugs entspricht.

Zur Validierung der Ansätze wurden 200 gebrauchte Schaftfräser herangezogen. Jeder wurde von drei Experten in eine von drei Verschleissklassen eingeteilt. Da es dabei zwischen den einzelnen Einteilungen der Experten Unterschiede gab, wurden nur noch diejenigen 82 Werkzeuge weiter betrachtet, die von den Experten einstimmig bewertet wurden. Zusätzlich wurden je 20 neue und frisch aufbereitete Schaftfräser hinzugezogen.

Von den schliesslich 122 Werkzeugen wurde mit der oben beschriebenen Bildaufnahmevorrichtung je eine Mantelaufnahme durchgeführt, welche für das Machine Learning verwendet wurde.

Für das Supervised Learning wurde einmal mit der Hough Transformation (HT) und einmal mit der Fast Fourier Transformation (FFT) gearbeitet.

Bei den Unsupervised Konzepten wurden die erläuterten Cluster-Algorithmen k-Means++ und Gaussian Mixture Models (GMM) verglichen.

Es wurden für jeden Lösungsansatz (Supervised und Unsupervised) je zwei Modelle trainiert. Einmal mit den Werkzeugen der Verschleissklasse 3 und einmal ohne. Das Weglassen der Verschleissklasse 3 ergibt sich aufgrund des Problems, dass diese Klasse viele Werkzeuge mit grossen Abbrüchen enthält, was einem hohen Verschleiss entspricht, der sich aber nicht in der Oberflächentextur äussert (bzw. nur sehr lokal).

Der Datensatz wurde von Hand in Trainings- und Testdatensatz unterteilt. Jeder Klassifikator basierte somit auf den identischen Test- und Trainingsdaten. Damit konnten die Klassifikatoren des Supervised und Unsupervised Learning jeweils direkt miteinander verglichen werden. Es wurde ein 80 % zu 20 % Split verwendet. Dabei wurde in jeder Verschleissklasse jeweils 1/5 der vorhandenen Daten in den Testdatensatz verschoben. Daraus ergab sich folgende Aufteilung:

| | neu / aufbereitet | VK 1 | VK 2 | VK 3 | total |
|---|---|---|---|---|---|
| Trainingsdatensatz | 32 | 24 | 26 | 15 | 97 |
| Testdatensatz | 8 | 5 | 6 | 3 | 22 |

Für die Evaluation wurde insbesondere die Metrik Accuracy (Genauigkeit) verwendet, bei der das Verhältnis von richtig klassifizierten Werkzeugen zur totalen Anzahl von Vorhersagen angeschaut wird. Sie ist wie folgt definiert: $Accuracy = \frac{TP + TN}{TP + TN + FP + FN} ,$ wobei die Parameter folgendes bedeuten:
- TP: true positives;
- TN: true negatives;
- FP: false positives;
- FN: false negatives.

Insgesamt ergeben sich für die Accuracy bezogen auf die Testdatensätze folgende Ergebnisse:

| **ML** | **Vorverarbeitung** | **Clustering** | **mit VK3?** | **Accuracy** |
|---|---|---|---|---|
| supervised | Hough Transf. | | ja | 72.7% |
| | | | nein | 84.2% |
| | FFT | | ja | 72.7% |
| | | | nein | 78.9% |
| unsupervised | | k-means++ | ja | 68.2% |
| | | | nein | 78.9% |
| | | GMM | ja | 77.3% |
| | | | nein | 84.2% |

Insgesamt ergeben sich für das Unsupervised Learning mit dem GMM-Clustering die besten Ergebnisse, wobei die Genauigkeit beim Weglassen der Verschleissklasse 3 erheblich besser ist. In einer Erweiterung des Verfahrens bietet es sich somit an, grosse lokale Defekte, z. B. Zahnabbrüche, durch andere Verfahren (z. B. entsprechende Bildverarbeitung) zu erkennen, und diese Werkzeuge unmittelbar der Verschleissklasse 3 zuzuordnen. Die übrigen können dann mittels des beschriebenen Verfahrens weiter analysiert werden.

Das beschriebene Verfahren für die Klassierung mittels Unsupervised Machine Learning bietet weiter den Vorteil, dass aufgrund der lokalen Klassierung vieler einzelner Bildausschnitte nebst der Verschleissklasse ein differenzierteres Bild vom Verschleiss des Werkzeugs erhalten werden kann. So lässt sich z. B. anhand eines Histogramms der Zuordnung der einzelnen Bildausschnitte zu Verschleissklassen gut erkennen, wie gross z. B. der Anteil der höchsten Verschleissklasse ist. Ein weiteres interessantes Mass ist die Summe der Verschleissklassen der Datenpunkte eines Werkzeugs.

Die Figur 9 ist ein schematisches Blockdiagramm einer erfindungsgemässen Anlage zum Ermitteln des Verschleisszustands und zum Aufbereiten eines Werkzeugs.

Die Anlage umfasst eine Bearbeitungsmaschine 101, z. B. eine Fräsmaschine, die in einem ersten Werk 100 angeordnet ist. Die Bearbeitungsmaschine umfasst in an sich bekannter Weise (mindestens) eine Arbeitsspindel 102, ein Werkzeugmagazin 103 und eine Transfereinrichtung 104 mit einer Werkzeugaufnahme, mittels welcher Werkzeuge 2 zwischen der Arbeitsspindel 102 und dem Werkzeugmagazin 103 ausgetauscht werden können. Bei den Werkzeugen handelt es sich im beschriebenen Beispiel um Vollmaterial-Schaftfräser mit helixförmigen Hauptschneiden am Mantel und geraden Nebenschneiden auf der Stirnseite des Werkzeugs 2. Die Transfereinrichtung 104 ermöglicht zudem ein Aussondern eines Werkzeugs 2, wobei das Werkzeug 2 in eine Entnahmeposition 105 bewegt wird. Ebenso lässt sich das Werkzeug 2 in die weiter oben beschriebene Bildaufnahmevorrichtung 1 transferieren.

Die von der Bildaufnahmevorrichtung 1 aufgenommenen Daten werden an eine Verarbeitungseinheit 110 übermittelt. Bei dieser handelt es sich um einen Rechner, auf welchem softwaremässig ein erstes Bildverarbeitungsmodul 111, ein zweites Bildverarbeitungsmodul 112 und ein Klassifiziermodul 113 realisiert sind. Das Bildverarbeitungsmodul 111 empfängt die Daten der Bildaufnahmevorrichtung 1 und verarbeitet sie wie oben beschrieben zu einem Bild mit Oberflächenstrukturinformationen.

Dieses wird dem zweiten Bildverarbeitungsmodul 112 zugeführt und dort weiter verarbeitet, namentlich zugeschnitten und gefiltert wie oben beschrieben. Die entsprechend vorverarbeiteten Bilder werden dem Klassifiziermodul 113 zugeführt, welche das abgebildete Werkzeug eine Verschleissklasse ("weiter verwendbar", "aufzubereiten", "zu entsorgen") zuordnet.

Auf diese Weise wird jedes Werkzeug nach der Entnahme aus der Arbeitsspindel auf seinen Verschleisszustand geprüft. Es kann sinnvoll sein, vor der Prüfung einen Reinigungsschritt durchzuführen, so dass die Messungen nicht durch anhaftenden Staub oder Späne beeinträchtigt werden. Zu diesem Zweck kann eine Reinigungsvorrichtung, z. B. mit einer Flüssigkeits- oder Luftdüse, eingesetzt werden. Falls der Verschleisszustand eine weitere Verwendung zulässt, wird das Werkzeug im Werkzeugmagazin 103 abgelegt. Falls eine Aufbereitung notwendig ist oder das Werkzeug entsorgt bzw. rezykliert werden soll, wird es in die Entnahmeposition 105 bewegt. Gleichzeitig wird das Ergebnis der Klassifizierung angezeigt. Daten zum aufzubereitenden Werkzeug 2 werden, zusammen mit einer eindeutigen Kennung des Werkzeugs in einer zentralen Datenbank 120 abgelegt. Die zentrale Kennung ist auch - z. B. optisch oder elektronisch - am Werkzeug 2 vermerkt.

Falls das Werkzeug 2 aufbereitet werden soll, wird es auf übliche Weise zu einer Aufbereitungseinrichtung 150 gesandt. Dort wird zunächst die Kennung mit einem Lesegerät 151 ausgelesen, z. B. mittels einer Kamera oder eines RFID-Lesegeräts und nachgeordneter Elektronik. Eine Steuerung 152 ruft dann gestützt auf die Kennung die Daten zum Werkzeug 2 von der Datenbank 120 ab. Anschliessend wird die Maschine zur Aufbereitung, z. B. eine Schleifmaschine 153, in Abhängigkeit der abgerufenen Daten gesteuert. Die Daten umfassen z. B. Angaben zu aufzubereitenden Bereichen (Stirn, Mantel; spezifische Angabe der Schneiden oder Schneidenregionen) und/oder Informationen zur derzeitigen Geometrie des Werkzeugs. So kann die Aufbereitung ohne weitere Datenerfassung effizient und zielführend erfolgen. Informationen über die erfolgte Aufbereitung werden wiederum in der Datenbank 120, der Werkzeugkennung zugeordnet, abgelegt.

Nach erfolgter Aufbereitung wird das Werkzeug 2 wieder zurück zum Werk 100 (oder zu einem anderen Werk) gesandt. Dort kann es weiter zum Einsatz kommen.

Die Erfindung ist nicht auf die dargestellten Ausführungsbeispiele beschränkt. Namentlich kann eine andere Quelle der Oberflächenbilder genutzt werden, die Vorverabeitung und/oder die Klassifizierung können auf andere Weise erfolgen. Die Bildaufnahmevorrichtung und die Verarbeitungseinheit können zudem unabhängig von einer spezifisch Bearbeitungsmaschine angeordnet und betrieben werden.

Zusammenfassend ist festzustellen, dass die Erfindung ein Verfahren zur Ermittlung eines Zustandes eines Werkzeugs angibt, welches automatisch und zuverlässig den Zustand eines Werkzeugs erkennen kann.

## Patentansprüche

1. Verfahren zur Ermittlung eines Zustandes eines Werkzeugs (2), umfassend folgende Schritte:
a) Aufnahme mehrerer optischer Bilder einer Oberfläche des Werkzeugs (2) bei unterschiedlichen Beleuchtungszuständen;
**gekennzeichnet durch**
b) Verarbeiten von Bilddaten der mehreren optischen Bilder mittels photometrischer Stereoanalyse zur Erzeugung eines Bildes mit Oberflächenstrukturinformationen, wobei es sich beim Bild mit Oberflächenstrukturinformationen um ein Höhenbild und/oder um ein Krümmungsbild handelt;
c) Vorverarbeiten des Bildes mit Oberflächenstrukturinformationen zur Erzeugung eines oder mehrerer vorverarbeiteter Bilder;
d) Klassierung des Zustandes des Werkzeugs (2) in eine von mindestens zwei Klassen anhand des einen oder der mehreren vorverarbeiteten Bilder mittels eines Machine-Learning-Verfahrens.

2. Verfahren nach Anspruch 1, **dadurch gekennzeichnet, dass** der Schritt des Vorverarbeitens ein Zuschneiden auf einen interessierenden Bereich (15) umfasst, wobei der interessierende Bereich diejenigen Bereiche der Oberfläche des Werkzeugs (2) umfasst, die von Verschleiss betroffen oder wo Fehler zu erwarten sind.

3. Verfahren nach einem der Ansprüche 1 oder 2, **dadurch gekennzeichnet, dass** es sich beim Machine-Learning-Verfahren um ein Supervised Machine-Learning-Verfahren handelt.

4. Verfahren nach Anspruch 3, **dadurch gekennzeichnet, dass** zum Generieren des einen oder der mehreren vorverarbeiteten Bilder im Bild mit Oberflächenstrukturinformationen Verschleiss- oder Fehlermerkmale isoliert werden, insbesondere durch mindestens eines der folgenden Verfahren:
a) Anwenden einer Hough-Transformation auf das Bild mit Oberflächenstrukturinformationen;
b) Anwenden einer Fast Fourier Transformation auf das Bild mit Oberflächenstrukturinformationen.

5. Verfahren nach Anspruch 3 oder 4, **dadurch gekennzeichnet, dass** im vorverarbeiteten Bild Partikel mit Pixeln in einem vorgegebenen Helligkeitsbereich identifiziert und anhand der identifizierten Partikel mehrere der folgenden Grössen als Features für das Machine-Learning-Verfahren bestimmt werden:
a) Fläche der Partikel;
b) gefüllte Fläche der Partikel;
c) äquivalenter Flächendurchmesser der Partikel;
d) Fläche einer Bounding Box der Partikel;
e) Hauptachsenlänge der Partikel;
f) maximaler Feret-Durchmesser der Partikel;
g) konvexe Fläche der Partikel;
h) Nebenachsenlänge der Partikel;
i) Umkreis der Partikel;
j) Mittelwert der Pixel im Helligkeitsbereich;
k) Standardabweichung der Pixel im Helligkeitsbereich;
l) Anzahl der Pixel im Helligkeitsbereich;
m) Anzahl der Partikel.

6. Verfahren nach Anspruch 5, **dadurch gekennzeichnet, dass** folgende Grössen als Features für das Machine-Learning-Verfahren bestimmt werden:
a) Fläche der Partikel;
c) äquivalenter Flächendurchmesser der Partikel;
e) Hauptachsenlänge der Partikel;
h) Nebenachsenlänge der Partikel;
j) Mittelwert der Pixel im Helligkeitsbereich und
m) Anzahl der Partikel.

7. Verfahren nach einem der Ansprüche 1 bis 6, **dadurch gekennzeichnet, dass** es sich beim Machine-Learning-Verfahren um ein Unsupervised Machine-Learning-Verfahren handelt, wobei in einem ersten Schritt anhand des vorverarbeiteten Bilds bzw. der mehreren vorverarbeiteten Bilder mehrere Features bestimmt und in einem zweiten Schritt ein Clustering durchgeführt wird.

8. Verfahren nach Anspruch 7, **dadurch gekennzeichnet, dass** zum Generieren der mehreren vorverarbeiteten Bilder das Bild mit Oberflächenstrukturinformationen mit Hilfe eines Sliding-Window-Verfahrens in mehrere überlappende Kacheln aufgeteilt wird, wobei für jedes einer Kachel entsprechende vorverarbeitete Bild mehrere vorgegebene Features für das Clustering bestimmt werden.

9. Verfahren nach Anspruch 8, **dadurch gekennzeichnet, dass** die Features aus den vorverarbeiteten Bildern mehrere aus folgenden Gruppen umfassen:
a) ein Mittelwert, eine Varianz und/oder ein Median des mittels eines zweidimensionalen Gabor-Filters weiter verarbeiteten vorverarbeiteten Bilds;
b) eine Summe eines Binärbilds erhalten aus dem mittels des zweidimensionalen Gabor-Filters weiter verarbeiteten vorverarbeiteten Bilds;
c) Features anhand einer Analyse auf Local Binary Pattern;
d) Haralick-Textur-Features;
e) einen Mittelwert und/oder eine Standardabweichung von Pixelwerten des vorverarbeiteten Bilds.

10. Verfahren nach einem der Ansprüche 7 bis 9, **dadurch gekennzeichnet, dass** das Clustering in 3-8, insbesondere in 4-6, Klassen vorgenommen wird.

11. Verfahren nach einem der Ansprüche 7 bis 10, **dadurch gekennzeichnet, dass** das Clustering mittels eines Gaussian-Mixture Models oder eines k-means++-Verfahrens durchgeführt wird.

12. Verfahren nach einem der Ansprüche 1 bis 11, **dadurch gekennzeichnet, dass** anhand der Bilddaten der mehreren optischen Bilder und/oder anhand des Bilds mit Oberflächenstrukturinformationen und/oder anhand des einen oder der mehreren zugeschnittenen Bilder mit Oberflächenstrukturinformationen eine abgebrochene Schneidkante des Werkzeugs (2) erkannt wird und dass bei einer erkannten abgebrochenen Schneidkante das Werkzeug (2) unmittelbar einer entsprechenden Zustandsklasse zugeordnet wird.

13. Verfahren nach einem der Ansprüche 1 bis 12, **dadurch gekennzeichnet, dass** das Verfahren zur Ermittlung des Zustands auf ein Schleif- oder Bohrwerkzeug (2) zur Werkstückbearbeitung in einer Werkzeugmaschine (153) angewandt wird, insbesondere auf ein Vollmaterial-Schaftwerkzeug (2).

14. Verfahren nach Anspruch 13, **dadurch gekennzeichnet, dass** separat ein erster Zustand einer mantelseitigen Schneidgeometrie und ein zweiter Zustand einer stirnseitigen Schneidgeometrie des Vollmaterial-Schaftwerkzeugs (2) bestimmt werden.

15. Verfahren nach Anspruch 14, **dadurch gekennzeichnet, dass** zur Bestimmung des ersten Zustandes ein auf einer ersten Datenmenge basierender Algorithmus eingesetzt wird und dass zur Bestimmung des zweiten Zustandes ein auf einer zweiten Datenmenge basierender Algorithmus eingesetzt wird, wobei die erste Datenmenge und die zweite Datenmenge unterschiedlich sind.

16. Verfahren zur Aufbereitung eines Werkzeugs (2), umfassend folgende Schritte:
a) Ermittlung des Zustandes eines Werkzeugs (2) mit einem Verfahren nach einem der Ansprüche 1 bis 15;
b) Steuern mindestens einer Einrichtung (153) zur Aufbereitung des Werkzeugs (2), insbesondere mittels eines Schleifvorgangs, wenn der Zustand vorgegebene Bedingungen erfüllt.

17. Verfahren nach Anspruch 16, **dadurch gekennzeichnet, dass** ein Beleuchtungssystem (8) zum Beleuchten einer Oberfläche des Werkzeugs (2) mit unterschiedlichen Beleuchtungszuständen und eine Kamera (10) zur Aufnahme mehrerer optischer Bildes der Oberfläche des Werkzeugs (2) bei den unterschiedlichen Beleuchtungszuständen an einem ersten Einsatzort angeordnet sind, dass am ersten Einsatzort gewonnene Daten in einer Datenbank (120) abgelegt werden, dass die Einrichtung (153) zur Aufbereitung an einem zweiten Einsatzort angeordnet ist und dass die Einrichtung (153) zur Aufbereitung Daten aus der Datenbank (120) abruft.

18. Vorrichtung (1) zur Ermittlung des Zustandes eines Werkzeugs (2), umfassend:
a) ein Beleuchtungssystem (8) zum Beleuchten einer Oberfläche des Werkzeugs (2) mit unterschiedlichen Beleuchtungszuständen;
b) eine Kamera (10) zur Aufnahme mehrerer optischer Bildes der Oberfläche des Werkzeugs (2) bei den unterschiedlichen Beleuchtungszuständen;
c) ein erstes Bildverarbeitungsmodul (111), das so konfiguriert ist, dass es Bilddaten der mehreren optischen Bilder mittels photometrischer Stereoanalyse zur Erzeugung eines Bilds mit Oberflächenstrukturinformationen verarbeitet, wobei es sich bei dem Bild mit Oberflächenstrukturinformationen um ein Höhenbild und/oder ein Krümmungsbild handelt;
d) ein zweites Bildverarbeitungsmodul (112), das so konfiguriert ist, dass es das Bild mit Oberflächenstrukturinformationen zur Erzeugung eines oder mehrerer vorverarbeiteter Bilder weiter verarbeitet; und
e) ein Klassifiziermodul (113), das so konfiguriert ist, dass es anhand des einen oder der mehreren vorverarbeiteten Bilder den Zustand des Werkzeugs (2) in eine von mindestens zwei Klassen mittels eines Machine-Learning-Verfahrens klassiert.

19. Vorrichtung (1) nach Anspruch 18, **dadurch gekennzeichnet, dass** das Beleuchtungssystem (8) und die Kamera (10) in eine Bearbeitungsmaschine (101) mit einer Aufnahme für das Werkzeug (2) integriert sind, insbesondere derart, dass das Beleuchtungssystem (8) das Werkzeug (2) beleuchten und die Kamera die optischen Bilder der Oberfläche des Werkzeugs (2) aufnehmen kann, wenn das Werkzeug (2) in der Aufnahme aufgenommen ist.

20. Anordnung, umfassend:
a) eine Vorrichtung (1) zur Ermittlung des Zustandes eines Werkzeugs (2) nach Anspruch 18 oder 19;
b) eine Einrichtung (153) zur Aufbereitung des Werkzeugs (2), insbesondere mittels eines Schleifvorgangs;
c) eine Steuerung (152) zum Steuern der Einrichtung (153) zur Aufbereitung, welche so konfiguriert ist, dass sie Informationen zum Zustand von der Vorrichtung (1) zur Ermittlung erhält und die Einrichtung (153) zur Aufbereitung des Werkzeugs (2) in Abhängigkeit der erhaltenen Informationen steuert.

## Claims

1. Method for determining a state of a tool (2), including the following steps:
a) recording a plurality of optical images of a surface of the tool (2) at different illumination states;
**characterized by**
b) processing image data of the plurality of optical images by means of photometric stereo analysis to produce an image with surface structure information, wherein the image with surface structure information is a height image and/or a curvature image;
c) preprocessing the image with surface structure information to produce one or more preprocessed images;
d) classifying the state of the tool (2) into one of at least two classes on the basis of the one or more preprocessed images by means of a machine learning method.

2. Method according to claim 1, **characterized in that** the step of preprocessing includes cutting to a region of interest, wherein the region of interest (15) includes those regions of the surface of the tool (2) which are affected by wear or where errors are to be expected.

3. Method according to claim 1 or 2, **characterized in that** the machine learning method is a supervised machine learning method.

4. Method according to claim 3, **characterized in that**, in order to generate the one or more preprocessed images, wear or error features are isolated in the image with surface structure information, in particular by at least one of the following methods:
a) applying a Hough transform to the image with surface structure information;
b) applying a fast Fourier transform to the image with surface structure information.

5. Method according to claim 3 or 4, **characterized in that** particles with pixels in a predefined brightness range are identified in the preprocessed image, and a plurality of the following quantities are determined as features for the machine learning method on the basis of the identified particles:
a) area of the particles;
b) filled area of the particles;
c) equivalent area diameter of the particles;
d) area of a bounding box of the particles;
e) main axis length of the particles;
f) maximum Feret diameter of the particles;
g) convex area of the particles;
h) minor axis length of the particles;
i) circumference of the particles;
j) mean value of the pixels in the brightness range;
k) standard deviation of the pixels in the brightness range;
l) number of pixels in the brightness range;
m) number of particles.

6. Method according to claim 5, **characterized in that** the following quantities are determined as features for the machine learning method:
a) area of the particles;
c) equivalent area diameter of the particles;
e) main axis length of the particles;
h) minor axis length of the particles;
j) mean value of the pixels in the brightness range; and
m) number of particles.

7. Method according to one of claims 1 to 6, **characterized in that** the machine learning method is an unsupervised machine learning method, wherein in a first step a plurality of features are determined on the basis of the preprocessed image or the multiple preprocessed images, and in a second step a clustering is carried out.

8. Method according to claim 7, **characterized in that**, in order to generate the multiple preprocessed images, the image with surface structure information is divided into a plurality of overlapping tiles with the aid of a sliding window method, wherein for each preprocessed image corresponding to a tile, a plurality of predefined features are determined for the clustering.

9. Method according to claim 8, **characterized in that** the features from the preprocessed images include a plurality from the following groups:
a) a mean value, a variance and/or a median of the preprocessed image further processed by means of a two-dimensional Gabor filter;
b) a sum of a binary image obtained from the preprocessed image further processed by means of the two-dimensional Gabor filter;
c) features based on an analysis on local binary pattern;
d) Haralick texture features;
e) a mean value and/or a standard deviation of pixel values of the preprocessed image.

10. Method according to one of claims 7 to 9, **characterized in that** the clustering is carried out into 3-8, in particular into 4-6, classes.

11. Method according to one of claims 7 to 10, **characterized in that** the clustering is carried out by means of a Gaussian mixture model or a k-means++ method.

12. Method according to one of claims 1 to 11, **characterized in that** a broken-off cutting edge of the tool (2) is identified on the basis of the image data of the plurality of optical images and/or on the basis of the image with surface structure information and/or on the basis of the one or more cut-to-size images with surface structure information, and **in that**, if a broken-off cutting edge is identified, the tool (2) is assigned directly to a corresponding class of state.

13. Method according to one of claims 1 to 12, **characterized in that** the method for determining the state is applied to a grinding or drilling tool (2) for workpiece machining in a machine tool (153), in particular to a solid material shank tool (2).

14. Method according to claim 13, **characterized in that** a first state of a jacket-sided cutting geometry and a second state of a front-sided cutting geometry of the solid material shank tool (2) are determined separately.

15. Method according to claim 14, **characterized in that** an algorithm based on a first data set is used to determine the first state, and **in that** an algorithm based on a second data set is used to determine the second state, wherein the first data set and the second data set are different.

16. Method for reconditioning a tool (2), including the following steps:
a) determining the state of a tool (2) using a method according to one of claims 1 to 15;
b) controlling at least one device (153) for reconditioning the tool (2), in particular by means of a grinding process, if the state meets predefined conditions.

17. Method according to claim 16, **characterized in that** an illumination system (8) for illuminating a surface of the tool (2) with different illumination states and a camera (10) for recording a plurality of optical images of the surface of the tool (2) at the different illumination states are arranged at a first location of use, **in that** data obtained at the first location of use are stored in a database (120), **in that** the device (153) for reconditioning is arranged at a second location of use, and **in that** the device (153) for reconditioning retrieves data from the database (120).

18. Device (1) for determining the state of a tool (2), including:
a) an illumination system (8) for illuminating a surface of the tool (2) with different illumination states;
b) a camera (10) for recording a plurality of optical images of the surface of the tool (2) at the different illumination states;
c) a first image processing module (111) configured to process image data of the plurality of optical images by means of photometric stereo analysis to produce an image with surface structure information, wherein the image with surface structure information is a height image and/or a curvature image;
d) a second image processing module (112) configured to further process the image with surface structure information to produce one or more preprocessed images; and
e) a classification module (113) configured to classify the state of the tool (2) into one of at least two classes on the basis of the one or more preprocessed images by means of a machine learning method.

19. Device according to claim 18, **characterized in that** the illumination system (8) and the camera (10) are integrated in a processing machine (101) with a receptacle for the tool (2), in particular such that the illumination system (8) can illuminate the tool (2) and the camera can record the optical images of the surface of the tool (2) when the tool (2) is received in the receptacle.

20. Arrangement, including:
a) a device (1) for determining the state of a tool (2) according to claim 18 or 19;
b) a device (153) for reconditioning the tool (2), in particular by means of a grinding process;
c) a controller (152) for controlling the device (153) for reconditioning, which controller is configured in such a way that it receives information relating to the state from the device (1) for determining and controls the device (153) for reconditioning the tool (2) on the basis of the information received.

## Revendications

1. Procédé, destiné à déterminer un état d'un outil (2), comprenant les étapes suivantes, consistant à :
a) prendre plusieurs images optiques d'une surface de l'outil (2) dans différentes situations d'éclairage ;
**caractérisé par**
b) le traitement de données d'images des plusieurs images optiques au moyen d'une analyse stéréo-photométrique, pour créer une image contenant des informations sur la structure superficielle, l'image contenant des informations sur la structure superficielle étant une image de hauteur et / ou une image de courbure ;
c) prétraiter l'image contenant des informations sur la structure superficielle, pour créer une ou plusieurs images prétraitées ;
d) classifier l'état de l'outil (2) dans une parmi au moins deux classes, sur la base de l'une ou des plusieurs images prétraitées au moyen d'un procédé d'apprentissage automatique.

2. Procédé selon la revendication 1, **caractérisé en ce que** l'étape du prétraitement comprend un recadrage sur une zone d'intérêt (15), la zone d'intérêt comprenant les zones de la surface de l'outil (2) qui sont affectées par l'usure ou pour lesquelles des défauts sont à attendre.

3. Procédé selon l'une quelconque des revendications 1 ou 2, **caractérisé en ce que** le procédé d'apprentissage automatique est un procédé d'apprentissage automatique supervisé.

4. Procédé selon la revendication 3, **caractérisé en ce que** pour générer l'une ou les plusieurs images prétraitées, dans l'image contenant des informations sur la structure superficielle, des caractéristiques d'usure ou de défauts sont isolées, notamment par au moins l'un des procédés suivants :
a) l'application d'une transformée de Hough sur l'image contenant des informations sur la structure superficielle ;
b) l'application d'une transformée de Fourier rapide sur l'image contenant des informations sur la structure superficielle.

5. Procédé selon la revendication 3 ou 4, **caractérisé en ce que** dans l'image prétraitée, des particules avec des pixels dans une plage de luminosité prédéfinie sont identifiées et sur la base des particules identifiées, plusieurs des dimensions suivantes sont fixées en tant que caractéristiques pour le procédé d'apprentissage automatique :
a) l'aire des particules ;
b) l'aire remplie des particules ;
c) le diamètre surfacique équivalent des particules ;
d) l'aire d'une boîte englobante des particules ;
e) la longueur du grand axe des particules ;
f) le diamètre de Feret maximal des particules ;
g) l'aire convexe des particules ;
h) la longueur du petit axe des particules ;
i) le périmètre des particules ;
j) la valeur moyenne des pixels dans la plage de luminosité ;
k) l'écart type des pixels dans la plage de luminosité ;
l) le nombre des pixels dans la plage de luminosité ;
m) le nombre des particules.

6. Procédé selon la revendication 5, **caractérisé en ce que** les grandeurs suivantes sont fixées en tant que caractéristiques pour le procédé d'apprentissage automatique :
a) l'aire des particules
c) le diamètre surfacique équivalent des particules ;
e) la longueur du grand axe des particules ;
h) la longueur du petit axe des particules ;
j) la valeur moyenne des pixels dans la plage de luminosité et
m) le nombre des particules.

7. Procédé selon l'une quelconque des revendications 1 à 6, **caractérisé en ce que** le procédé d'apprentissage automatique est un procédé d'apprentissage automatique non supervisé, dans une première étape, sur la base de l'image prétraitée ou des plusieurs images prétraitées, plusieurs caractéristiques étant fixées et dans une deuxième étape, un regroupement étant réalisé.

8. Procédé selon la revendication 7, **caractérisé en ce que** pour générer les plusieurs images prétraitées, à l'aide d'un procédé à fenêtre glissante, l'image contenant des informations sur la structure superficielle est divisée en plusieurs tuiles se chevauchant, plusieurs caractéristiques prédéfinies pour le regroupement étant fixées pour chaque image prétraitée correspondant à une tuile.

9. Procédé selon la revendication 8, **caractérisé en ce que** les caractéristiques issues des images prétraitées en comprennent plusieurs des groupes suivants :
a) une valeur moyenne, une variance et / ou une médiane de l'image prétraitée, traitée ultérieurement au moyen d'un filtre de Gabor bidimensionnel ;
b) une somme d'une image binaire, recueillie à partir de l'image prétraitée, traitée ultérieurement au moyen du filtre de Gabor bidimensionnel ;
c) des caractéristiques sur la base d'une analyse par motifs binaires locaux ;
d) des caractéristiques de texture de Haralick ;
e) une valeur moyenne et / ou un écart type de valeurs des pixels de l'image prétraitée.

10. Procédé selon l'une quelconque des revendications 7 à 9, **caractérisé en ce que** le regroupement est effectué en 3 à 8, notamment en 4 à 6 classes.

11. Procédé selon l'une quelconque des revendications 7 à 10, **caractérisé en ce que** le regroupement est réalisé au moyen d'un modèle de mélange gaussien ou d'un procédé K-means++.

12. Procédé selon l'une quelconque des revendications 1 à 11, **caractérisé en ce que** sur la base des données d'images des plusieurs images optiques et / ou sur la base de l'image contenant des informations sur la structure superficielle et / ou sur la base de l'une ou des plusieurs images recadrées contenant des informations sur la structure superficielle, un tranchant rompu de l'outil (2) est détecté et **en ce que** si un tranchant rompu est détecté, l'outil (2) est directement affecté à une classe d'état correspondante.

13. Procédé selon l'une quelconque des revendications 1 à 12, **caractérisé en ce que** le procédé destiné à déterminer l'état est appliqué sur un outil de meulage ou de perçage (2) pour l'usinage des pièces dans une machine-outil (153), notamment sur un outil à queue (2) en matériau plein.

14. Procédé selon la revendication 13, **caractérisé en ce qu'**un premier état d'une géométrie de coupe latérale et un deuxième état d'une géométrie de coupe frontale de l'outil à queue (2) en matériau plein sont fixés séparément.

15. Procédé selon la revendication 14, **caractérisé en ce que** pour fixer le premier état, un algorithme basé sur une première quantité de données est mis en œuvre et **en ce que** pour fixer le deuxième état, un algorithme basé sur une deuxième quantité de données est mis en œuvre, la première quantité de données et la deuxième quantité de données étant différentes.

16. Procédé, destiné à reconditionner un outil (2), comprenant les étapes suivantes, consistant à :
a) déterminer l'état d'un outil (2) à l'aide d'un procédé selon l'une quelconque des revendications 1 à 15 ;
b) piloter au moins une installation (153) pour le reconditionnement de l'outil (2), notamment au moyen d'un procédé de meulage, lorsque l'état satisfait à des conditions prédéfinies.

17. Procédé selon la revendication 16, **caractérisé en ce qu'**un système d'éclairage (8) destiné à éclairer une surface de l'outil (2) dans différentes situations d'éclairage et une caméra (10), destinée à prendre plusieurs images optiques de la surface de l'outil (2) dans les différentes situations d'éclairage sont placés sur un premier lieu d'intervention, **en ce que** des données recueillies sur le premier lieu d'intervention sont sauvegardées dans une base de données (120), **en ce que** l'installation (153) destinée à reconditionner est placée dans un deuxième lieu d'intervention et **en ce que** l'installation (153) destinée à reconditionner interroge des données à partir de la base de données (120).

18. Dispositif (1), destiné à déterminer l'état d'un outil (2), comprenant :
a) un système d'éclairage (8), destiné à éclairer une surface de l'outil (2) dans différentes situations d'éclairage ;
b) une caméra (10), destinée à prendre plusieurs images optiques de la surface de l'outil (2) dans les différentes situations d'éclairage ;
c) un premier module de traitement d'images (111), qui est configuré de sorte à traiter des données d'images des plusieurs images optiques au moyen d'une analyse stéréo-photométrique pour la création d'une image contenant des informations sur la structure superficielle, l'image contenant des informations sur la structure superficielle étant une image de hauteur et / ou une image de courbure ;
d) un deuxième module de traitement d'images (112), qui est configuré de sorte à traiter ultérieurement l'image contenant des informations sur la structure superficielle, pour créer une ou plusieurs images prétraitées ; et
e) un module de classification (113), qui est conçu de sorte à classifier sur la base de l'une ou des plusieurs images prétraitées l'état de l'outil (2) dans une parmi au moins deux classes au moyen d'un procédé d'apprentissage automatique.

19. Dispositif (1) selon la revendication 18, **caractérisé en ce que** le système d'éclairage (8) et la caméra (10) sont intégrés dans une machine d'usinage (101) dotée d'un logement pour l'outil (2), notamment de telle manière que le système d'éclairage (8) puisse éclairer l'outil (2) et que la caméra puisse prendre les images optiques de la surface de l'outil (2) lorsque l'outil (2) est reçu dans le logement.

20. Ensemble, comprenant :
a) un dispositif (1), destiné à déterminer l'état d'un outil (2) selon la revendication 18 ou 19 ;
b) une installation (153), destinée à reconditionner l'outil (2), notamment au moyen d'un processus de meulage ;
c) un système de commande (152), destiné à piloter l'installation (153) de reconditionnement, qui est configuré de sorte à recueillir des informations concernant l'état de la part du dispositif (1) de détermination et à piloter l'installation (153) destinée à reconditionner l'outil (2) en fonction des informations recueillies.
